(19) Europäisches Patentamt
European Patent Office
Office européen des brevets

(11) EP 2 131 507 B1

(12) **EUROPEAN PATENT SPECIFICATION**

(45) Date of publication and mention of the grant of the patent:
**01.12.2010 Bulletin 2010/48**

(51) Int Cl.:
***H04B 7/04*** *(2006.01)*

(21) Application number: **08010375.7**

(22) Date of filing: **06.06.2008**

# (54) A user selection apparatus for a mobile communication system

Benutzerauswahlvorrichtung für ein mobiles Kommunikationssystem

Appareil de sélection d'utilisateur pour un système de communication mobile

(84) Designated Contracting States:
**DE GB**

(43) Date of publication of application:
**09.12.2009 Bulletin 2009/50**

(73) Proprietor: **NTT DoCoMo, Inc.**
**Chiyoda-Ku**
**Tokyo 100-6150 (JP)**

(72) Inventors:
- **Guthy, Christian**
  **80803 München (DE)**
- **Utschick, Wolfgang**
  **85051 Ingolstadt (DE)**
- **Dietl, Guido**
  **80805 München (DE)**
- **Nossek, Josef A.**
  **82393 Iffeldorf (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 768 274** **EP-A- 1 863 248**

- **ZUKANG SHEN; RUNHUA CHEN; ANDREWS J G; HEATH R W JR; EVANS B L: "Low complexity user selection algorithms for multiuser MIMO systems with block diagonalization" IEEE TRANSACTIONS ON SIGNAL PROCESSING, vol. 54, no. 9, September 2006 (2006-09), pages 3658-3663, XP002503418**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention is in the field of communication systems utilizing multiple-input-multiple-output (MIMO = multiple-input-multiple-output) radio channels.

Development in mobile communications constantly seeks for improvement of each user's data rate and system capacity in order to provide as many users as possible with high quality services. In a point to multipoint communication system, as for instance the downlink of a mobile communication system, a transmitter has the important task of assigning resources such as time, frequency and space components to the receivers under its coverage. If the transmitter knows the channel of each user, multiple users can be served at the same time and over the same frequency multiplexing them in space. In a multipoint to point communication system, as for example the uplink of a mobile communication system, this task has to be accomplished by the receiver.

In the following, analysis will be directed to the downlink, application to the uplink is straightforward. For this purpose multiple antennas at a base station or access point and at mobile users are employed which leads to the well-known Multiple-Input-Multiple-Output systems. Here a MIMO-system with $K$ users and with $M_{Tx}$ antennas at the transmitter and $M_{Rx,k}$ antennas at the $k$-th receiver is considered. The $k$-th user's channel is described by the matrix

$$\boldsymbol{H}_k \in \mathbb{C}^{M_{Rx,k} \times M_{Tx}} .$$

Assuming perfect knowledge of these matrices at the transmitter a common optimization problem looked at is the maximization of sum capacity. The optimum solution to that problem can be found by iterative waterfilling, cf. in W. Yu, Sum-Capacity Computation for the Gaussian Vector Broadcast Channel, IEEE Transactions on Information Theory, 52:754-759, 2006, and in W. Yu, W. Rhee, S. Vishwanath, S. Jafar, and A. Goldsmith, Sum Power Iterative Waterfilling for Multi-antenna Gaussian Broadcast Channels, IEEE Transactions on Information Theory, 51:1570-1580, 2005.

As an efficient non-iterative approach to this problem the Successive Encoding Successive Allocation Method (SESAM = Successive Encoding Successive Allocation Method) has been proposed in P. Tejera, W. Utschick, G. Bauch, and J. A. Nossek, Subchannel Allocation in Multiuser Multiple Input Multiple Output Systems, IEEE Transactions on Information Theory, 52:4721-4733, Oct. 2006, which is able to achieve the optimum solution very closely. Both algorithms rely on the principle of Dirty Paper Coding (DPC = Dirty Paper Coding) M.H.M. Costa, Writing on Dirty Paper, IEEE Transactions on Information Theory, 29:439-441, May 1983, which states that interference that is known when a certain data stream is encoded can be perfectly canceled and the maximum achievable rate of this stream is the same as if that interference was not present. The practical implementation of nearly optimum DPC, however, is numerically involved.

Furthermore the complexity of both algorithms linearly scales with the number of users, although the number of users actually served is usually smaller or equal to the number of transmit antennas. For this reason several user selection algorithms have been proposed which select a subset of users based on a simple criterion with which the corresponding algorithms are executed. For the optimum approach a user pre-selection method is presented in G. Aniba and S. Aissa, Multi-User Capacity Maximization for MIMO Gaussian Broadcast Channels, In Proc. of International Conference on Communications (ICC), 2006, which relies on the Singular Value Decomposition (SVD = Singular Value Decomposition) of the composed channel matrix and is therefore rather complicated as well. The composed channel matrix $\boldsymbol{H}$ contains the channel matrices of all users stacked row-wise in one matrix. In case of 3 users for example, the composed channel matrix is given by

$$\boldsymbol{H} = \begin{bmatrix} \boldsymbol{H}_1 \\ \boldsymbol{H}_2 \\ \boldsymbol{H}_3 \end{bmatrix} .$$

Correspondingly a lot of research has been conducted regarding user selection, when only linear approaches such as Block Diagonalization or Zero-Forcing Beamforming (ZFBF = Zero-Forcing Beamforming) are used for the maximization of sum rate, cf. Q.H. Spencer, A.L. Swindlehurst, and M. Haardt, Zero-forcing Methods for Downlink Spatial Multiplexing in Multiuser MIMO Channels, IEEE Trans. on Signal Processing, 52(2):461-471, February 2004, and G. Caire and S. Shamai, On the Achievable Throughput of Multiantenna Gaussian Broadcast Channel, IEEE Transactions on Information Theory, 49(7):1691-1706, July 2003.

G. Dimic and N.D. Sidoropoulos, On Downlink Beamforming with Greedy User Selection, IEEE Transactions

on Signal Processing, 53(10):3857-3868, October 2005, discuss the problem of simultaneous multi user downlink beam forming, also called spatial interference cancellation. The authors employ a transmit antenna array to create multiple antenna beams directed towards the individual users, where they seek to increase the throughput measured by a sum capacity or a sum rate. The sum capacity or sum rate is determined by accumulating the individual user capacities depending on the individual user antenna diagrams and the corresponding cross interference introduced therewith. The authors investigate the case of having more users than transmit antennas, which requires user selection. Optimal solutions to this problem can be prohibitively complex for online implementation at the base station. Other solutions may capitalize on multi user diversity to achieve a significant fraction of sum capacity at a lower complexity cost. The authors analyzed the throughput performance in Rayleigh fading of a sub-optimal greedy pre-coding based scheme and propose a user selection method based on simple zero-forcing beam forming.

Further details can be found in J. Wang, D.J. Love, and M. Zoltowski, User Selection for the MIMO Broadcast Channel with a Fairness Constraint, In Proc. of IEEE International Conference on Acoustics, Speech, and Signal Processing (ICASSP), 2007, and further approaches for zero forcing are disclosed in T. Yoo and A. Goldsmith, On the Optimality of Multiantenna Broadcast Scheduling Using Zero-Forcing Beamforming, IEEE Journal on Selected Areas in Communications, 24(3):528-541, March 2006, and T. Yoo and A. Goldsmith, Sum-Rate Optimal Multi-Antenna Downlink Beamforming Strategy Based on Clique Search, In Proc. of Global Telecommunications Conference (GLOBECOM), 2005.

Further details and further user selection approaches can be found in M. Fuchs, G. Del Galdo, and M. Haardt, Low-Complexity Space - Time - Frequency Scheduling for MIMO Systems With SDMA, IEEE Transactions on Vehicular Technology, 56:2775 - 2784, September 2007, Q.H. Spencer and A.L. Swindlehurst. Channel Allocation in Multi-user MIMO Wireless Communications Systems, In Proc. of International Conference on Communications (ICC), 2004, and T.F. Maciel and A. Klein, A Convex Quadratic SDMA Grouping Algorithm Based on Spatial Correlation, In Proc. of International Conference on Communications (ICC) , 2007.

For user grouping methods the difference in maximum sum rate between an SDMA (SDMA = Space Division Multiple Access) based approach employing DPC (DPC = Dirty Paper Precoding) and TDMA (TDMA = Time Division Multiple Access) can be considered. Subsuming users to be selected in a set *S*, a user selection criterion reads as

$$\max_{S}\left[\sum_{k\in S} R_{k,DPC} - \max_{k\in S} R_{k,su}\right] = \max_{S} g(S) \qquad (1.1)$$
$$s.t.|S| = N,$$

whereas the cardinality of *S* must be equal to a predefined value *N* and $R_{k,DPC}$ denote the rates of user *k* achievable with DPC. The maximum sum rate for TDMA is equal to the maximum single-user rate $R_{k,su}$, which is the rate a user can achieve if it receives all system resources.

Fig. 11 shows a state of the art scenario, where multiple antennas are operated at a base station and a plurality of mobile terminals are in the field. It can be seen that the terminals which are in the field may also utilize multiple antennas, establishing a MIMO radio channel. In the following it is assumed that perfect channel knowledge is given at, for example, a base station as well as at a mobile terminal. This is shown in Fig. 11 by the arrow indicating that perfect CSI (CSI = Channel State Information) is available.

Fig. 12 shows a visualization of an applied objective function *g(S)* for a two user scenario. The supportable rate of user 1 is given on the abscissa and the supportable data rate of user 2 is given on the ordinate. From Fig. 12 it can be seen that user 1 can support a rate of 10 when utilizing all resources by itself, respectively user 2 may achieve a maximum data rate of 8 for the same case. Note that no units are given in Fig. 12 with respect to the user data rates, as the numbers here only serve as qualitative measures, which also holds for the remainder.

Fig. 12 exhibits the objective function graphically for a sample scenario with two users. The dashed line has a slope of -1. As it touches the capacity region at the point of maximum sum rate, the value for the sum rate can be read off at the points of intersection with the axes. For simplicity reasons, but not meant to be limiting, considerations to single carrier systems are considered in the following.

However, from the intersection point of the sum capacity in the view graph with the dashed line, it is obvious that the sum capacity of the system, i.e., when serving both users at the same time on the same frequency utilizing spatial channel separation, is higher than the supportable data rate of the individual users.

Zukang Shen, et al., "Low complexity user selection algorithms for multiuser MIMO systems with block diagonalization", IEEE Transactions on Signal Processing, vol. 54, no. 9, September 2006, uses block diagonalization as a precoding technique for eliminating inter-user interference in downlink multiuser MIMO systems. Assuming that all users

have the same number of receive antennas and further utilizing all receive antennas when being scheduled for transmission, the number of simultaneously supported users with block diagonalization is limited by the ratio of the number of base station transmit antennas to the number of user receive antennas. In a downlink MIMO system with a large number of users, the base station may select a subset of users to serve in order to maximize the total throughput. The brute-force search for the optimal user set, however, is computationally prohibitive. The authors propose two low-complexity suboptimal user selection algorithms for multiuser MIMO systems with block diagonalization. Both concepts aim to select a subset of users such that the total throughput is nearly maximized. The first user selection algorithm greedily maximizes the total throughput, whereas the criterion of the second algorithm is based on the channel energy. Both concepts have a linear complexity and a total number of users and achieve around 95 percent of the total throughput of the complete search method in simulations.

It is the object of the present invention to provide a concept for user selection in a mobile communication system which achieves improved results in terms of sum capacity, while having moderate complexity.

The object is achieved by user selection apparatus according to claim 1 and a method for selecting a sub-group of users according to claim 14.

The present invention is based on the finding that for a given limited complexity higher system capacity or transmission capacity or gain with respect to single user rates can be achieved when simultaneously served users utilize balanced individual capacities or transmission capacity measures. Moreover, in a MIMO scenario computational complexity can be reduced if a smaller number of users is taken into account. Therefore, embodiments of the present invention may carry out a user pre-selection, i.e. determining a pre-selection group out of all users, which has less users and in which users are balanced to a certain extent with respect to their individual transmission capacities, single user rates, channel gains etc.

In other words, it is a finding of the present invention that, for a given complexity, when selecting users, de-selecting the best user, i.e., the user with the highest channel gain, individual transmission capacity or highest supportable transmission rate, can provide an advantage with respect to the total transmission capacity or transmission rate of simultaneously served users in a MIMO scenario. This may be the case, if the best user has a much higher channel gain, individual transmission rate or transmission capacity than the second best user.

Embodiments of the present invention may provide the advantage that a higher system capacity or combined capacity may be achieved when taking into account a group of users which are balanced with respect to their channel gains, individual transmission rates, individual capacities, etc. Moreover, embodiments may provide the advantage that sophisticated MIMO user selection and sub-channel assignment algorithms may be carried out, since a pre-selection may provide a smaller group of users, bringing computational complexity of more sophisticated algorithms to a feasible level. Advantages achieved by embodiments may be two-fold, a system capacity may be increased since a balanced group of users is taken into account and second, the balanced group of users may have a cardinality, i.e., the number of users within the balanced group of users, which allows for deployment of complex MIMO algorithms further increasing a system's capacity through better utilization of the MIMO radio channels.

Embodiments may be carried out in a two phase manner. In a first phase, a pre-selection group is determined from a plurality of users, in which users are balanced with respect to their channel gains on their MIMO radio channels. In a further phase, a user selection or MIMO sub-channel allocation algorithm may be carried out based on the pre-selection group.

Other embodiments may employ an additional phase between the pre-selection and the MIMO processing. In other words, once a balanced group of users has been found in a first phase within the pre-selection group, a second phase or selection may be carried out based on the pre-selection group in order to determine an intermediate selection group. The selection of the intermediate selection group may be based on spatial properties of the MIMO channel. The third phase, i.e., the actual complex MIMO processing may, in these embodiments, be carried out based on the intermediate selection group.

In other words, embodiments may start out from a large number of users, i.e., the plurality of users. In a first phase, a pre-selection group of users can be selected from the plurality of users, wherein the users of the pre-selection group utilize, to a certain extent, balanced channel gains or individual user rates. The number of users in the pre-selection group can be lower than the number of users in the plurality of users. The number of users in the pre-selection group may further be reduced to an intermediate selection group. When reducing the pre-selection group to the intermediate selection group, spatial properties of the MIMO radio channels of the users in the pre-selection group can be evaluated. In other words, the spatial compatibility of users within the pre-selection group is evaluated, selecting a sub-set of users from the pre-selection group which are, to a certain extent, spatially compatible for the intermediate selection group. The intermediate selection group may have less users than the pre-selection group due to the de-selection of spatially incompatible users. In a third phase, the complex MIMO processing can be carried out with the reduced number of users in the intermediate selection group.

Embodiments may therewith enable performance of complex MIMO algorithms by choosing from a plurality of users, having balanced and spatially compatible MIMO radio channels.

Embodiments of the present invention may provide the advantage that user selection for achieving high system throughput can be carried out with less complexity by performing pre-selection first. The pre-selection can utilize a much simpler criterion, involving less complexity as, for example, sophisticated algorithms as SESAM etc. For example, user pre-selection, i.e., the reduction of the group of all users to a smaller pre-selection group to choose a subgroup for transmission from, maybe based on channel gains or channel capacities of the individual users, for which it is not necessary to carry out complex operations as, for example, a singular value decomposition (SVD = Singular Value Decomposition) or an Eigenvalue analysis.

It is a further finding of the present invention that a pre-selection group, which is smaller than the group of all users, can be determined based on simple criteria, without jeopardizing the system throughput. Moreover, pre-selection may be carried out on the basis of multiple criteria, where the determination of the subgroup for transmission from the pre-selection group may utilize a more sophisticated algorithm, for example, taking into account spatial properties of the users of the pre-selection group.

While the existing user grouping approaches aim at identifying users which lead to maximum sum rate, embodiments may carry out a user grouping aiming at the maximum gain obtainable by spatially multiplexing several users. Therefore users selected for transmission may be served by iterative waterfilling, SESAM or similar approaches such that e.g. the difference between the maximum sum rate and the maximum rate one of the selected users could achieve with the totally available transmit power or transmission resources becomes a maximum.

Embodiments with such a selection rule can be motivated as follows. The sum capacity achieving or approaching algorithms imply a large computational complexity, especially as they employ DPC. In many practical scenarios one can therefore not afford to serve all users by these algorithms. Nevertheless in embodiments for some users employing these algorithms may remain still affordable, while the other users are separated by simpler approaches as Time Division Multiple Access. In embodiments the extra effort invested in the more complicated algorithms should therefore lead to an optimized, in some cases even maximum gain in sum rate compared to a scenario where only one user is served at the same time on the same frequency.

Embodiments of the present invention may comprise a user selection method aiming at identifying the users which lead to the maximum or at least to an optimized increase in sum rate compared to TDMA when spatial multiplexing algorithms for example employing Dirty Paper Coding are applied.

Embodiments provide the advantage that they may ideally lead to a maximum, they may provide gain in sum rate under given computational constraints. Embodiments may enable a scaled complexity.

In the following, more detailed embodiments will be described using the accompanying figures, in which

Fig. 1a shows an embodiment of a user selection apparatus;

Fig. 1b shows another embodiment of a user selection apparatus;

Fig. 1c shows an embodiment of a selector;

Fig. 1d shows another embodiment of a selector;

Fig. 2a shows an embodiment of a method for user selection;

Fig. 2b shows an embodiment of a method for pre-selection;

Fig. 2c shows an embodiment of a method for selection;

Fig. 3a shows a view graph illustrating the sum capacity for a scenario with two users having large channel gains;

Fig. 3b shows a view graph illustrating the sum capacity for a scenario with two users having a small channel gain;

Fig. 4a shows a view graph illustrating the sum capacity for a scenario with two users having strong spatial separation;

Fig. 4b shows a view graph illustrating the sum capacity for a scenario with two users having no spatial separation;

Fig. 5a shows a view graph illustrating the sum capacity for a scenario with two users having balanced channels;

Fig. 5b shows a view graph illustrating the sum capacity for a scenario with two users having unbalanced channels;

Fig. 6a shows a view graph illustrating simulation results on the average sum capacity for a two user scenario;

Fig. 6b shows a view graph illustrating simulation results on the average sum capacity in a four user scenario;

Fig. 7 shows a simulation scenario;

Fig. 8 shows a view graph illustrating simulation results for the average gain;

Fig. 9 shows another simulation scenario;

Fig. 10 shows a view graph illustrating simulation results on the average gain;

Fig. 11 shows a state of the art MIMO scenario; and

Fig. 12 shows a view graph illustrating the sum capacity in a conventional two user scenario.

Fig. 1a shows a user selection apparatus 100 for being operative in a mobile communication system and for selecting a sub-group of users from a plurality of users for transmission, a user being adapted for communicating through a multiple-input-multiple-output (MIMO = Multiple-Input-Multiple-Output) radio channel. The user selection apparatus 100 comprises a pre-selector 110 for de-selecting a user having a transmission capacity measure which is higher than a transmission capacity measure of another user by a predetermined amount to obtain a pre-selection group not including the de-selected user, such that the pre-selection group comprises two users having two transmission capacity measures which are equal or different from each other by less than the pre-determined amount. The user selection apparatus 100 further comprises a processor 115 for determining the sub-group of users for transmission based on the MIMO radio channels.

In embodiments the pre-determined amount can be relative or absolute. The pre-selector 110 can be adapted for determining the transmission capacity measure in terms of a highest achievable data rate of a user's spatial sub-channel of the MIMO radio channel. The pre-selector 110 may be adapted for determining a transmission capacity measure by evaluating a singular value decomposition of a user's MIMO radio channel matrix representing the user's MIMO radio channel, wherein the pre-selector 110 can be adapted for determining the transmission capacity measure in terms of the highest singular value of a user's MIMO radio channel matrix. In another embodiment the pre-selector 110 can be adapted for determining the transmission capacity measure in terms of a Frobenius norm of a user's MIMO radio channel matrix representing the user's MIMO radio channel. In further embodiments the pre-selector 110 may be adapted for sorting the users according to their transmission capacity measures and for comparing a user's transmission capacity measure to another user's transmission capacity measure, the other user having the next lower or the next higher transmission capacity measure within the plurality of users. The pre-selector 110 can be further adapted for evaluating a quotient of the user's transmission capacity measure and the other user's transmission capacity measure against a pre-determined threshold, wherein the pre-selector 110 can be adapted for de-selecting the user from the pre-selection group if the quotient exceeds the threshold in case the other user has the next lower transmission capacity measure and for de-selecting the user from the pre-selection group if the quotient is below the threshold in case the other user has the next higher transmission capacity measure. Generally different thresholds may be used in dependence on whether the users are sorted in ascending or descending order or whether de-selection is started with the high capacity/rate user or with the low capacity/rate users.

The pre-selector 110 can be adapted for determining the users of the pre-selection group by selecting from the plurality of users a predetermined number of users having limited differences in their transmission capacity measures on their MIMO radio channels and having the highest transmission capacity measures with limited differences within the plurality of users. The pre-selector 110 may deselect a user with a highest transmission capacity measure on the MIMO radio channel if the difference between the highest transmission capacity measure and the second highest transmission capacity measure exceeds the pre-determined amount.

The pre-selector 110 may, in embodiments, be adapted for determining a pre-selection group having a predetermined number of users. Moreover, the pre-selector 110 can be adapted for determining the users of the pre-selection group by selecting from the plurality of users, the pre-determined number of users having a limited difference in their transmission capacity measures on their MIMO radio channels and having the highest transmission capacity measure within the plurality of users fulfilling both of these conditions.

In other words, the best user, i.e., the user with the highest transmission capacity measure, may not be selected for the pre-selection group and therewith not for transmission, because its transmission capacity measure is so much higher than the transmission capacity measure of a second highest user, i.e., the pre-selector is adapted for selecting from the group of all users, a pre-selection group in a way, such that the balance between the users fulfils a certain requirement, i.e., the differences in the transmission capacity measures of the users in the pre-selection group undergo a certain limit.

Therewith, the pre-selector 110 is adapted to choose a group from all users having balanced channels, preferably the group with the highest transmission capacity measures.

In further embodiments, as shown in Fig. 1b, the user selection apparatus 100 may comprise a selector 120 for selecting users from the pre-selection group for an intermediate selection group based on a spatial property of the MIMO radio channels of the users of the pre-selection group, which is different from the transmission capacity measure, and the processor 115 can be adapted for determining the sub-group of users for transmission based on the MIMO radio channels of the users of the intermediate selection group.

In embodiments the selector 120 can be adapted for selecting users from the pre-selection group for the intermediate selection group according to a combined transmission capacity and/or spatial compatibility of the users of the intermediate selection group. The selector 120 may be adapted for selecting for the intermediate selection group a user from the pre-selection group, for which the users of the intermediate selection group have a higher combined transmission capacity measure than a user with the highest transmission capacity measure from the pre-selection group.

Fig. 1c shows an embodiment of a selector. The selector 120 can be adapted for selecting users from the plurality of users for the intermediate selection group of users wherein the spatial compatibility corresponds to a combined transmission capacity measure of the users of the intermediate selection group. The selector 120 can be adapted for selecting from the plurality of users comprising a first user having a MIMO radio channel $\boldsymbol{H}_1$, a second user having a MIMO radio channel $\boldsymbol{H}_2$ and a third user having a MIMO radio channel $\boldsymbol{H}_3$, and for evaluating a first combined transmission capacity measure $C_{sum}(S)_1$ based on $\boldsymbol{H}_1$, a second combined transmission capacity measure $C_{sum}(S)_2$ based on $\boldsymbol{H}_2$, a third combined transmission capacity measure $C_{sum}(S)_3$ based on $H_3$, a fourth combined transmission capacity measure $C_{sum}(S)_{12}$ based on $\boldsymbol{H}_1$ and $\boldsymbol{H}_2$, a fifth combined transmission capacity measure $C_{sum}(S)_{13}$ based on $\boldsymbol{H}_1$ and $\boldsymbol{H}_3$, a sixth combined transmission capacity measure $C_{sum}(S)_{23}$ based on $\boldsymbol{H}_2$ and $\boldsymbol{H}_3$ and a seventh combined transmission capacity measure $C_{sum}(S)_{123}$ based on $\boldsymbol{H}_1$, $\boldsymbol{H}_2$ and $\boldsymbol{H}_3$, and for selecting for the intermediate selection group $S$ the combination of users with the highest combined transmission capacity measure.

According to Fig. 1d, the selector 120 can be adapted for evaluating a first combined transmission capacity measure of a first user of the intermediate selection group and a second non-selected user, and for evaluating a second combined transmission capacity measure of the first user of the intermediate selection group and a third non-selected user, and for selecting the second user for the intermediate selection group if the first combined transmission capacity measure is higher than the second combined transmission capacity measure and for selecting the third user for the intermediate selection group otherwise.

The selector 120 may select a predetermined number $|S|$ of users from the pre-selection group for the intermediate selection group $S$, where the MIMO radio channel of a user $k$ is represented by a MIMO radio channel matrix $\boldsymbol{H}_k$ and wherein for the users of the intermediate selection group $S$ a determinant

$$\left|\sum_{k\in S}\boldsymbol{H}_k^H\boldsymbol{H}_k\right|$$

is optimized or maximized based on permutations of $|S|$ users from the pre-selection group. In other words, the spatial compatibility measure may be based on the determinant above.

It is a further aspect of the present invention that the spatial compatibility of users can be evaluated in terms of their MIMO radio channel matrices representing their MIMO radio channels. For a certain combination of users, the combined transmission capacity measure may in embodiments be based on a determinant of an accumulated matrix, accumulating channel energy matrices of the combination of users.

In other words, if a MIMO radio channel matrix of a user is known, a channel energy matrix can be determined by multiplying the complex conjugate transpose with the matrix itself. The result will deliver on the diagonal energies within the spatial sub-channels of the MIMO radio channel. The off-diagonal elements will determine a measure of the cross coupling or cross talk between said channels. The determinant of such a matrix will provide a measure determining the relation between channel energy and cross talk between the sub-channels. When accumulating multiple such matrices, for example by simple addition, the determinant will provide a measure on the energy in the combined sub-channels in relation to the cross talk of the combined sub-channels. In other words, when accumulating said channel energy matrices for a combination of users, the determinant of said matrix may provide a measure on their spatial compatibility, i.e., the relation of energy in the sub-channels and the cross-talk involved, also being a measure on the spatial separability of the multiple spatial sub-channels in the combined MIMO radio channel.

Embodiments may utilize a combined transmission capacity measure in terms of evaluating accumulated energy matrices of combinations of users. Embodiments therewith provide the advantage that the spatial compatibility can be evaluated in a less complex manner than, for example, with conventional concepts utilizing singular value or

Eigen value decompositions and projections of individual users' MIMO radio channel matrices. By choosing a combination of users, which have a good or even the highest spatial compatibility, high capacity can be achieved by carrying out a more complex MIMO sub-channel or user selection algorithms on the basis of said combination, i.e., on the basis of the intermediate selection group with a reduced number of users compared to the number of available users.

In further embodiments the selector 120 can be adapted for selecting for the intermediate selection group $S$ users $k$ from the pre-selection group $\hat{S}$ for which a combined transmission capacity in terms of a sum capacity $C_{sum}(S)$, according to

$$\lim_{P_{Tx}\to\infty} C_{sum}(S) = \log_2\left|\boldsymbol{I} + \sum_{k\in S}\boldsymbol{H}_k^H\boldsymbol{H}_k\frac{P_{Tx}}{M_{Rx,k}N}\right|$$

with

$$\sum_{k\in S} M_{Rx,k} \le M_{Tx}$$

or an estimated sum capacity $C_{sum}(S)$ according to

$$\lim_{P_{Tx}\to\infty} C_{sum}(S) \approx \log_2\left|\boldsymbol{I} + \sum_{k\in S}\boldsymbol{H}_k^H\boldsymbol{H}_k\frac{P_{Tx}}{M_{Rx,k}N}\right|$$

with

$$\sum_{k\in S} M_{Rx,k} > M_{Tx},$$

or

$$C_{sum}(S) \approx \log_2\left|\boldsymbol{I} + \sum_{k\in S}\boldsymbol{H}_k^H\boldsymbol{H}_k\frac{P_{Tx}}{M_{Rx,k}N}\right| \quad \text{for} \quad P_{Tx} < \infty,$$

is optimized or maximized, where $M_{Rx,k}$ denotes a number of receive antennas of user $k$, $P_{Tx}$ is the transmit power, $\boldsymbol{H_k}$ represents the MIMO radio channel matrix of user $k$, $\boldsymbol{I}$ is an identity matrix, $N$ represents the cardinality of $S$ and $M_{Tx}$ denotes the number of transmit antennas used for transmission.

Moreover, the selector 120 can be adapted for selecting a user $\pi(1)$ for the intermediate selection group $S$ having a MIMO radio channel represented by a MIMO radio channel matrix $\boldsymbol{H}_{\pi(l)}$ having a highest Frobenius norm of the users of the pre-selection group $\hat{S}$ according to

$$\pi(1) = \arg\max_{k\in\hat{S}}\|\boldsymbol{H}_k\|_F .$$

The selector 120 may add a user $\pi(i)$ from non-selected users $k$ for the intermediate selection group $S$ for which an increase in sum capacity or estimated sum capacity $\Delta C_{sum}(S\cup k)$ is the strongest, according to

$$\pi(i) = \arg\max_{k \in \hat{S} \setminus S} \Delta C_{sum}(S \cup k) \text{ ,}$$

whereas

$$\Delta C_{sum}(S \cup k) = C_{sum}(S \cup k) - C_{sum}(S) \text{ ,}$$

and the sum capacity $C_{sum}(S)$ is determined according to

$$\lim_{P_{Tx} \to \infty} C_{sum}(S) = \log_2 \left| \boldsymbol{I} + \sum_{k \in S} \boldsymbol{H}_k^H \boldsymbol{H}_k \frac{P_{Tx}}{M_{Rx,k} N} \right|$$

with

$$\sum_{k \in S} M_{Rx,k} \leq M_{Tx}$$

or an estimated sum capacity $C_{\text{sum}}(S)$ according to

$$\lim_{P_{Tx} \to \infty} C_{sum}(S) \approx \log_2 \left| \boldsymbol{I} + \sum_{k \in S} \boldsymbol{H}_k^H \boldsymbol{H}_k \frac{P_{Tx}}{M_{Rx,k} N} \right|$$

with

$$\sum_{k \in S} M_{Rx,k} > M_{Tx} \text{ ,}$$

or

$$C_{sum}(S) \approx \log_2 \left| \boldsymbol{I} + \sum_{k \in S} \boldsymbol{H}_k^H \boldsymbol{H}_k \frac{P_{Tx}}{M_{Rx,k} N} \right| \quad \texttt{for} \quad P_{Tx} < \infty \text{ ,}$$

where $M_{Rx,k}$ denotes a number of receive antennas of user $k$, $P_{Tx}$ is the transmit power, $\boldsymbol{H}_k$ represents the MIMO radio channel matrix of user $k$, $\boldsymbol{I}$ is an identity matrix, $N$ represents the cardinality of $S$ and $M_{Tx}$ denotes a number of transmit antennas used for transmission.

In embodiments the processor 115 can be adapted for processing the MIMO radio channels of the users of the pre-selection group or of the intermediate selection group to obtain processed MIMO radio channels and for determining the sub-group of users for transmission based on a spatial property of the processed MIMO radio channels of the users of the pre-selection group or of the intermediate selection group.

The processor 115 is adapted for selecting users from the pre-selection group or from the intermediate selection group for the sub-group based on SESAM (SESAM = Successive Encoding Successive Allocation Method).

Fig. 2a shows a flowchart illustrating an embodiment of a method for selecting a sub-group of users from a plurality of users for transmission in a mobile communication system, a user being adapted for communicating through

a MIMO radio channel, comprising the steps of de-selecting 200 a user having a transmission capacity measure which is higher than a transmission capacity measure of another user by a predetermined amount to obtain a pre-selection group not including the de-selected user, such that the pre-selection group comprises two users having two transmission capacity measures which are equal or different from each other by less than the pre-determined amount. The method further comprises a step of determining the sub-group of users for transmission based on the MIMO radio channels.

In further embodiments the method can further comprise an optional step of selecting 250 users, indicated by the dashed box in Fig. 1a, from the pre-selection group for an intermediate selection group of users based on a spatial property of the MIMO radio channels of the users of the pre-selection group, which is different from the transmission capacity measure and wherein the step of determining refers to determining the sub-group of users for transmission based on the MIMO radio channels of the users of the intermediate selection group.

As shown in Fig. 2b, in further embodiments the step of de-selecting 200 may comprise the steps of receiving 205 a pre-determined size of the pre-selection group and sorting 210 the plurality of users according to the Frobenius norms or the single user rates of their MIMO radio channel matrices representing their MIMO radio channels in decreasing order. The step of de-selecting 200 may further comprise steps of including 215 all users in the pre-selection group and comparing 220 the Frobenius norm or the single user rate of the user with the highest Frobenius norm or the highest single user rate from the pre-selection group with the Frobenius norm or single user rate of the user having the second highest Frobenius norm or the second highest single user rate from the pre-selection group.

Moreover, steps of de-selecting 225 the user with the highest Frobenius norm or the highest single user rate from the pre-selection group and returning to the step of comparing 220 if the highest Frobenius norm or the highest single user rate is higher than a factor $\alpha$ multiplied by the second highest Frobenius norm or the second highest single user rate of the user from the pre-selection group and de-selecting 230 users with the lowest Frobenius norms or the lowest single user rates from the pre-selection group to match the pre-determined size may be comprised.

Once a pair of users is found, not overshooting the factor $\alpha$, the method in the present embodiment comprises a step 230 of de-selecting users with the lowest Frobenius norms or single user rates, i.e., from the back of the sequence, from the pre-selection groups in order to match the pre-determined size received in step 205.

According to Fig. 2c the step of selecting 250 can comprise the steps of receiving 255 a pre-determined size of the intermediate selection group and selecting 260 the user having the highest Frobenius norm or the highest single user rate from the pre-selection group. Furthermore, steps of evaluating 265 a capacity or a sum increase for non-selected users in the pre-selection group on the basis of the selected users in the intermediate selection group and selecting 270 the user with the highest capacity or the highest sum rate increase for the intermediate selection group may be comprised. Furthermore, a step of returning to the step of evaluating 265 until the size of the intermediate selection group has reached the pre-determined size of the intermediate selection group can be comprised.

Please note that other embodiments may utilize other transmission capacity measures, or sort the users in increasing order, or just choose from the users in different ways. The present embodiment is not to be interpreted limiting in any way.

An optimum solution of (1.1) may require an exhaustive search over all possible sets *S*. In a scenario with *K* users that would require to search for the best set amongst $\binom{K}{N}$ possible sets. Clearly it is infeasible in practical systems and counteracts the desired aim of complexity reduction. Before explaining another embodiment in detail three factors that influence the objective function *g(S)* shall be introduced. Although the following illustrations will address the case of *K*=2 users, the statements given hold for an arbitrary number of users.

Certainly in a group with users having large channel gains, the potential gains of spatial multiplexing of users is higher. By "channel gains" it is referred to a transmission capacity measure, e.g. to the Frobenius norms of the MIMO channel matrices $\boldsymbol{H}_k$ representing the MIMO radio channels of a user *k,* denoted by $\|\boldsymbol{H}_k\|_F$, which indicate the overall energy of the channel, cf. Z. Shen, R. Chen, J.G. Andrews, R.W. Heath, and B.L. Evans, Low Complexity User Selection Algorithms for Multiuser MIMO Systems with Block Diagonalization, IEEE Transactions on Signal Processing, 54(9): 3658 - 3663, September 2006.

Alternatively in embodiments the single-user rates $R_{k,su}$, which are the maximum transmission rates one user can achieve, if it receives all transmission resources on its own, may serve as transmission capacity measure for the channel gains. Fig. 3a and Fig. 3b show two view graphs illustrating the sum capacity in a scenario involving two users. For Fig. 3a it is assumed that the two users both have large channel gains, i.e., high transmission capacity measures. For Fig. 3b it is assumed that the two users considered have small channel gains, i.e., rather low transmission capacity measures. Figs. 3a and 3b exhibit two scenarios, where the channels of the users 1 and 3 have the same singular vectors but different singular values. Correspondingly the channels of users 2 and 4 differ only in the singular values. Singular values may in embodiments be considered as channel gains or transmission capacity measures. In Fig. 3 the capacity region and the region achievable with TDMA are plotted. Although the maximum single user rate also becomes

higher with increasing channel gain, the difference between this rate and the sum rate obtainable when both users are served simultaneously also increases.

Another aspect to be taken into account when evaluating the sum capacity is the spatial alignment of the users' radio channels. Selecting the users for *S* according to the largest Frobenius norms or equivalently according to the largest single-user rates as proposed in H. Viswanathan, S. Venkatesan, and H. Huang, Downlink Capacity Evaluation of Cellular Networks With Known-Interference Cancellation, IEEE Journal on Selected Areas in Communications, 21 (6):802-811, June 2003 is a simple method for preselection but it completely fails if the channels of the users with the largest channel gains are strongly spatially aligned.

Fig. 4a and Fig. 4b show two view graphs, illustrating the sum capacity in a two user scenario when their spatial separation is high, see Fig. 4a, respectively when their spatial separation is evanescent, i.e., when they are spatially aligned, see Fig. 4b. Fig. 4b shows an extreme case, where the ranges of the two users channels completely overlap. Furthermore the right singular vectors of the users have been chosen identically. Hence spatial separation of the users is not possible and the capacity region coincides with the TDMA rate region. On the other hand large gains are possible, if the users' channels are not spatially aligned, i.e. the range of one user's channel completely lies in the nullspace of the other user's channel, as shown in Fig. 4a. In this case the two users do not interfere with each other and both users can fully benefit from their channel gains. Therefore the spatial alignment of the users' radio channels can be identified as a second factor of influence for the sum capacity.

Another factor to be taken i-nto account for the sum capacity is the balance of the users' radio channels. The factors of influence mentioned so far also play a crucial role in grouping algorithms for zero forcing approaches. The next criterion, namely the balance of the users' channels is more specific to the objective function *g(S)*. By balance of channels it is referred to the ratio of the Frobenius norms of the users' channels, where in embodiments the Frobenius norms may serve as transmission capacity measures.

Figs. 5a and 5b show two view graphs illustrating the sum capacity in a two user scenario, wherein Fig. 5a shows the sum capacity for a scenario where the two users have balanced channels, i.e., both users have similar channel gains or transmission capacity measures. Fig. 5b illustrates the case where the two users in the scenario have very different channel gains, i.e., unbalanced channels or unbalanced transmission capacity measures.

An unbalanced scenario is shown in Fig. 5b. User 3 has a much larger channel gain than user 4, which implicitly leads to a larger single-user rate for this user. In such an unbalanced scenario the point of maximum sum capacity lies close to or, as in the example depicted in Fig. 5b, even on the point, where the user with the largest channel gain obtains all available system resources. That is because a shift of resources to other users leads only to marginal gains, whereas the losses for the strongest user involved therewith are more harmful for sum capacity. On the other hand for users with similarly large channel gains the point of maximum sum rate is likely to lie far apart from a corner point, where one user receives all system resources. That implies a potential for higher gains in sum rate.

From the factors of influence described in the previous sections it can be observed that gains and balance of the channels can be determined relatively easy, while the spatial alignment of the channels cannot be computed as simple as the Frobenius norms or transmission capacity measures. Furthermore to check the latter property for each combination of users new computations are required, while for the other properties it suffices to compute the scalar Frobenius norms as transmission capacity measures once for every user and compare them to find an appropriate group.

This fact is the motivation for a two-phase user grouping embodiment. In phase I of the embodiment, e.g. carried out by the pre-selector 110, users are sorted out according to the simple criteria, in phase II of the embodiment, e.g. carried out by the selector 120, the subgroup for transmission, i.e. to be served, with SDMA based approaches employing DPC is selected from the reduced set or the pre-selection group of users obtained in phase I by a more complicated search. In the following the two phases of the embodiment will be detailed.

In phase I the aim is to find a set or pre-selection group $\hat{S}$ containing candidate users for the group of users to be served with SDMA. In order to control the complexity of the following phase it is proposed to predefine the cardinality of $\hat{S}$, whereas $N \le |\hat{S}| < K$. One can select $|\hat{S}| = N$ in embodiments which skip phase II. First the Frobenius norms of all users' channels $\|H_k\|_F$ can be computed and sorted e.g. in descending order. In the present embodiment beginning with the user with the largest Frobenius norm or transmission capacity measure it is checked whether

$$\frac{\|\boldsymbol{H}_i\|_F}{\|\boldsymbol{H}_{i+1}\|_F} < \alpha \,, \qquad (1.2)$$

where $\alpha$ denotes a predefined threshold and it is assumed that *i* indices the Frobenius norms in decreasing order. If (1.2) holds, user *i* is not excluded from the set and the test is stopped, otherwise this user is excluded and the test is continued with user *i*+1. (1.2) therefore excludes or de-selects users which have much larger channel gains than the other users and therefore tries to avoid the case of unbalanced channels. Afterwards the desired size of the set $\hat{S}$ pre-

selection group is achieved by removing the users with the smallest Frobenius norms according to the first factor of influence. Similarly embodiments may additionally remove users from $\hat{S}$ until the smallest Frobenius norm in $\hat{S}$ is larger than $1/\alpha$ or another factor times the second smallest Frobenius norm. Optionally a different factor may be used. In this case $\hat{S}$ will have less users than originally planned.

In the following the second phase, phase II, of the embodiment will be illuminated, which may be carried out by the selector 120. In this phase the spatial comparability of the users is checked and the final set $S$ is selected. As a measure for compatibility the figures proposed e.g. in M. Fuchs, G. Del Galdo, and M. Haardt. Low-Complexity Space -Time - Frequency Scheduling for MIMO Systems With SDMA, IEEE Transactions on Vehicular Technology, 56:2775 - 2784, September 2007, or T.F. Maciel and A. Klein, A Low-Complexity SDMA Grouping Strategy for the Downlink of Multi-User MIMO Systems, In Proc. of IEEE International Symposium on Personal, Indoor and Mobile Radio Communications (PIMRC) , 2006, are not considered for this embodiment as those are intended for linear zero-forcing approaches. In the present embodiment an estimation for the sum capacity at high SNR from J. Lee and N. Jindal, High SNR Analysis for MIMO Broadcast Channels, Dirty Paper Coding Versus Linear Precoding, IEEE Transaction on Information Theory, 53:4787-4792, 2007, is rather taken into account.

Besides the spatial correlations between the users this formula also takes into account that DPC can be employed at the transmitter and that therefore it is not solely relied on orthogonalities between the signal spaces of the users in the set. As the transmit power $P_{Tx}$ goes to infinity, the sum capacity $C_{sum}(S)$ can be computed according to

$$\lim_{P_{Tx}\to\infty} C_{sum}(S) = \log_2\left|\boldsymbol{I} + \sum_{k\in S} \boldsymbol{H}_k^H \boldsymbol{H}_k \frac{P_{Tx}}{M_{Rx,k}N}\right| \qquad (1.3)$$

with

$$\sum_{k\in S} M_{Rx,k} \leq M_{Tx}, \qquad (1.4)$$

alternatively an estimated sum capacity may be evaluated by

$$\lim_{P_{Tx}\to\infty} C_{sum}(S) \approx \log_2\left|\boldsymbol{I} + \sum_{k\in S} \boldsymbol{H}_k^H \boldsymbol{H}_k \frac{P_{Tx}}{M_{Rx,k}N}\right|$$

with

$$\sum_{k\in S} M_{Rx,k} > M_{Tx},$$

or

$$C_{sum}(S) \approx \log_2\left|\boldsymbol{I} + \sum_{k\in S} \boldsymbol{H}_k^H \boldsymbol{H}_k \frac{P_{Tx}}{M_{Rx,k}N}\right| \quad \text{for} \quad P_{Tx} < \infty,$$

where $M_{Rx,k}$ denotes the number of receive antennas of user $k$ and $\boldsymbol{I}$ denotes the identity matrix. Hence at high SNR the optimum covariance matrices in the dual uplink become scaled identity matrices.

When the conditions of (1.4) are not met or at medium SNR, (1.3) constitutes a good approximation according

to the above estimation for the sum capacity in embodiments, according to J. Lee and N. Jindal, High SNR Analysis for MIMO Broadcast Channels, Dirty Paper Coding Versus Linear Precoding, IEEE Transaction on Information Theory, 53: 4787-4792, 2007.

Figs. 6a and 6b show view graphs illustrating simulation results. Fig. 6a depicts simulation results on the average sum capacity in a two user scenario, and Fig. 6b illustrates similar simulation results in a four user scenario. Both view graphs show the average sum capacity versus the user SNR (SNR = Signal-to-Noise-Ratio).

Figs. 6a and 6b show a comparison of the estimated sum capacity with the Sato bound in a system with $K$=2 users, $M_{Tx}$ = 4 transmit antennas and $M_{Rx,k}$ = 2 receive antennas (for $k$ =1,2). The capacities have been averaged over 10000 spatial indoor Non-Line-of Sight (NLOS = Non-Line-of Sight) scenarios which have been created according to the WINNER (WINNER = Wireless World Initiative New Radio) channel model D.S. Baum et al, Final Report on Link Level and System Level Channel Models, Technical report, IST-2003-507581 WINNER D5.4 v. 1.0, 2005.

When (1.4) is fulfilled, as in Fig. 6a, the estimation fits the real capacity quite well on average already at medium SNR. In case of 4 users with 2 receive antennas, when the condition (1.4) is not fulfilled, the error becomes larger, nevertheless the two curves show the same behavior. For pre-selection purposes, i.e. to find the pre-selection group best suitable for SDMA, this approximation will be enough in some embodiments. In order to avoid the inaccuracies associated with not fulfilling (1.4), embodiments may also compute the SVDs of the channels

$$\boldsymbol{H}_k = \sum_{i=1}^{rank(\boldsymbol{H}_k)} \sigma_{k,i} \boldsymbol{u}_{k,i} \boldsymbol{v}_{k,i}^H$$

and consider each product $\sigma_{k,i}\boldsymbol{v}_{k,i}^H$ as separate channel. These equivalent channels result from applying the left singular vectors as receive filters. However, this imposes additional computational complexity, as the SVDs of the users' channels are required, whereas possible improvements are low.

(1.3) may still be to complicated to perform an exhaustive search for the best set $S$ within $\hat{S}$ in some practical environments. Embodiments may therefore carry out a successive enlargement of the set or intermediate selection group $S$ as follows. The first user in the set, denoted as $\pi$(l), can be the user with maximum Frobenius norm in the pre-selection group $\hat{S}$, i.e.

$$\pi(1) = \arg\max_{k \in \hat{S}} \left\| \boldsymbol{H}_k \right\|_F . \qquad (1.5)$$

In each of the consecutive steps the user is added to the subgroup $S$ which leads to the strongest increase in estimated sum capacity. The $i$-th user is therefore determined according to

$$\pi(i) = \arg\max_{k \in \hat{S} \setminus S} \Delta C_{sum}(S \cup k) ,$$

whereas

$$\Delta C_{sum}(S \cup k) = C_{sum}(S \cup k) - C_{sum}(S) .$$

Afterwards $S$ is updated according to $S= S \cup \pi(i)$. In order to compute $C_{sum}(S)$ in each step the final power allocation is used, i.e. the factor 1/$N$ remains in (1.3). Note, that therefore as long as $S$ contains less than $N$ users, $C_{sum}$ ($S$) may not be an estimation of the sum capacity achievable with the given transmit power. The algorithm is finished after $N$ steps, when the subgroup $S$ exhibits the desired cardinality.

In the following simulation results will be presented. For the simulations the WINNER channel model D.S. Baum et al, Final Report on Link Level and System Level Channel Models, Technical report, IST-2003-507581 WINNER D5.4 v. 1.0, 2005 whereas a single carrier system is used. The bandwidth equals 132 KHz and a transmitter with $M_{Tx}$ =4

antennas is placed in the center of a 120m×120m indoor scenario. For the first simulation 30 users have been randomly placed in this area. Each user operates $M_{Rx,k}$ = 2 receive antennas and no Line-of-Sight to the transmitter. Fig. 7 exhibits a sample scenario. Fig. 7 illustrates a simulation scenario, where a base station BS utilizing four antennas indicated by stars is located in the center of the scenario. In Fig. 7, crosses indicate the 30 users equally distributed over a 120mx120m indoor NLOS (NLOS = None-Line-of Sight) scenario.

Fig. 8 shows a view graph illustrating simulation results of the average gain versus the SNR of a user. The view graph indicates four different graphs exhaustive search (indicated by dashed line and crosses), reduced exhaustive search according to an embodiment (indicated by solid line and crosses), proposed approach according to an embodiment (indicated by solid line and asterisks) and Frobenius norm according to an embodiment (phase 1 only, indicated by solid line and triangles).

In Fig. 8 the gain *g(S)* averaged over 1500 random scenarios is shown. The gain is measured as the difference in sum rate achievable with SESAM and the maximum single-user rate within *S*. For phase I the cardinality of the set of the pre-selection group $\hat{S}$ has been set to $|\hat{S}|$=15 and the threshold $\alpha$ has been chosen to be $\alpha$ =30. The cardinality of the final set or intermediate selection group *S* has been equal to the number of transmit antennas, i.e. $|S| = M_{Tx}=4$. The curve labeled by "Reduced exhaustive search" shows the gain achievable if the user $\pi$(l) determined according to (1.5) is forced to be in the set *S*, i.e. the exhaustive search is only conducted to find the three further users to be served with SESAM together with user $\pi$(l) in this embodiment.

Hence the difference between exhaustive search and the embodiment is mainly due to the fact that the embodiment may choose the first user in a heuristic but simple manner. If this user is part of *S*, the embodiment leads to the same performance as the reduced exhaustive search. The lowest curve shows the gains achievable when the user grouping is conducted with $|\hat{S}| = N$, i.e. phase II is completely skipped. Apart from the ratio test (1.2), this algorithm is similar to the one presented by H. Viswanathan, S. Venkatesan, and H. Huang, Downlink Capacity Evaluation of Cellular Networks With Known-Interference Cancellation, IEEE Journal on Selected Areas in Communications, 21(6):802-811, June 2003, where the users are selected according to the strongest single-user rates.

Next, scenarios are considered where the users are highly spatially aligned. Fig. 9 illustrates another simulation scenario, with the base station BS in the center and users gathered in two clusters, namely cluster #1 and cluster #2. Cluster size is 20m×20m and 10 users are equally distributed within the clusters. From Fig. 9 can be seen that users being located in different clusters have a good spatial separation, while users located in the same cluster are almost spatially aligned. 20 users are randomly placed into two clusters centered at (-50m, 50m) and (100m, 30m), whereas the transmitter defines the center of the coordinate system. For each scenario the users have been randomly placed in a square of size 20m×20m around these center points. Fig. 9 exhibits a sample scenario. The resulting gains in sum rate averaged over 5000 clustered scenarios are shown in Fig. 10.

Fig. 10 shows a view graph illustrating simulation results of the average gain over the SNR of a user. Five graphs are shown in Fig. 10, exhaustive search (indicated by dashed line with cross), reduced exhaustive search according to an embodiment (indicated by solid line with cross), proposed approach according to an embodiment (phase II only, indicated by solid line with circle), proposed approach according to an embodiment (phase I and phase II, indicated by solid line with asterisk) and Frobenius norm based according to an embodiment (phase I only, indicated by solid line with triangle).

Fig. 10 also shows simulation results where phase I is completely skipped according to an embodiment (indicated by solid line with circles), i.e. $|\hat{S}|$ = 20. This algorithm leads to the best performance without an exhaustive search, whereas it is only slightly above the embodiment with $|\hat{S}|$=10. Applying phase I only leads to severe performance degradation.

Embodiments of the present invention allow to establish advanced spatial assignment algorithms as, for example, SESAM in a MIMO communication scenario, at a reasonable complexity. Embodiments have the advantage, that spatial algorithms requiring high processing performance can be carried out on a pre-selected group of users, which is smaller than the group of all users potentially available for transmission. Embodiments of the present invention therewith enable implementation of sophisticated spatial multiplexing or MIMO algorithms, increasing system capacity, and increasing user satisfaction. Moreover, since embodiments of the present invention may enable provision of higher rate and higher quality services, embodiments may also contribute to enhancement of the service portfolio in mobile communication systems.

In general, the computational complexity of sum capacity approaching multiuser MIMO transmission techniques increases with the number of users. Thus, in highly loaded systems, the computational burden when considering all users for transmit signal processing, is often too high. In such cases, embodiments of the present invention provide the advantage that it is possible to group users, e.g. through a pre-selection and apply the numerically involved algorithms only to users of a pre-selected group, i.e. the subgroup for transmission, separately.

Embodiments of the present invention can combat the problem of finding an appropriate group of users to be served with complex transmit signal processing algorithms. Embodiments may perform user grouping or user pre-selection such that the computational effort for these algorithms leads to the maximum possible gain in sum rate compared

to simpler approaches, where no Dirty Paper Coding is used. Embodiments may carry out two phases. First, a pre-selection of users may be made based on computationally efficient criteria derived e.g. from the Frobenius norms of the channels, while the final, computationally more expensive or involved selection of the subgroup of users which are actually selected for transmission can be performed with the reduced amount of users by embodiments of the present invention.

Depending on certain implementation requirements of the inventive methods, the inventive methods can be implemented in hardware or in software. The implementation can be performed using a digital storage medium, in particular a flash memory, a disc, a DVD or a CD having electronically readable control signals stored thereon, which cooperate with a programmable computer system such that the inventive methods are performed. Generally, the present invention is therefore a machine readable carrier with a program code being operative for performing the inventive methods when the computer program product runs on computer or processor. In other words, the inventive methods are, therefore, a computer program having a program code for performing at least one of the inventive methods when the computer program runs on a computer or a processor.

List of Reference Signs

| | |
|---|---|
| 100 | User Selection Apparatus |
| 110 | Pre-selector |
| 120 | Selector |
| 200 | De-selecting |
| 205 | Receiving |
| 210 | Sorting |
| 215 | Including |
| 220 | Comparing |
| 225 | De-selecting |
| 230 | De-selecting |
| 250 | Selecting |
| 255 | Receiving |
| 260 | Selecting |
| 265 | Evaluating |
| 270 | Selecting |
| 275 | Comparing |

## Claims

**1.** A user selection apparatus (100) for being operative in a mobile communication system and for selecting a sub-group of users from a plurality of users for transmission, a user being adapted for communicating through a multiple-input-multiple-output (MIMO = Multiple-Input-Multiple-Output) radio channel, the user selection apparatus (100) **characterized by**:

a pre-selector (110) for de-selecting a user having a transmission capacity measure which is higher than a transmission capacity measure of another user by a predetermined amount to obtain a pre-selection group not including the de-selected user, such that the pre-selection group comprises two users having two transmission capacity measures which are equal or different from each other by less than the pre-determined amount; and
a processor (115) for determining the sub-group of users for transmission based on the MIMO radio channels.

**2.** The user selection apparatus (100) of claim 1, wherein the pre-selector (110) is adapted for determining the transmission capacity measure in terms of a highest achievable data rate of a user's spatial sub-channel of the MIMO radio channel and wherein the pre-determined amount is relative or absolute.

**3.** The user selection apparatus (100) of claim 1 or 2, wherein the pre-selector (110) is adapted for determining a transmission capacity measure by evaluating a singular value decomposition of a user's MIMO radio channel matrix representing the user's MIMO radio channel, wherein the pre-selector (110) is adapted for determining the transmission capacity measure in terms of the highest singular value of a user's MIMO radio channel matrix.

**4.** The user selection apparatus (100) of one of the claims 1 to 3, wherein the pre-selector (110) is adapted for determining the transmission capacity measure in terms of a Frobenius norm of a user's MIMO radio channel matrix representing the user's MIMO radio channel.

**5.** The user selection apparatus (100) of one of the claims 1 to 4, wherein the pre-selector (110) is adapted for sorting the users according to their transmission capacity measures and for comparing a user's transmission capacity measure to another user's transmission capacity measure, the other user having the next lower or the next higher transmission capacity measure within the plurality of users.

**6.** The user selection apparatus (100) of one of the claims 1 to 5, wherein the pre-selector (110) is adapted for determining the users of the pre-selection group by selecting from the plurality of users a predetermined number of users having limited differences in their transmission capacity measures on their MIMO radio channels and having the highest transmission capacity measures with limited differences within the plurality of users.

**7.** The user selection apparatus (100) of one of the claims 1 to 6 further comprising a selector (120) for selecting users from the pre-selection group for an intermediate selection group based on a spatial property of the MIMO radio channels of the users of the pre-selection group, which is different from the transmission capacity measure, and wherein the processor (115) is adapted for determining the sub-group of users for transmission based on the MIMO radio channels of the users of the intermediate selection group.

**8.** The user selection apparatus (100) of claim 7, wherein the selector (120) is adapted for selecting users from the pre-selection group for the intermediate selection group according to a combined transmission capacity and/or spatial compatibility of the users of the intermediate selection group.

**9.** The user selection apparatus (100) of claim 8, wherein the selector (120) is adapted for selecting for the intermediate selection group a user from the pre-selection group, for which the users of the intermediate selection group have a higher combined transmission capacity measure than the user with the highest transmission capacity measure from the pre-selection group.

**10.** The user selection apparatus (100) of claim 9, wherein the selector (120) is adapted for selecting a predetermined number $|S|$ of users from the pre-selection group for the intermediate selection group $S$, wherein the MIMO radio channel of a user $k$ is represented by a MIMO radio channel matrix $\boldsymbol{H}_k$ and wherein for the users of the intermediate selection group $S$ a determinant

$$\left|\sum_{k \in S} \boldsymbol{H}_k^H \boldsymbol{H}_k\right|$$

is optimized or maximized based on permutations of $|S|$ users from the pre-selection group.

**11.** The user selection apparatus (100) of one of the claims 7 to 10, wherein the selector (120) is adapted for selecting for the intermediate selection group $S$ users $k$ from the pre-selection group $\hat{S}$ for which a combined transmission capacity in terms of a sum capacity $C_{sum}(S)$, according to

$$\lim_{P_{Tx} \to \infty} C_{sum}(S) = \log_2 \left| \boldsymbol{I} + \sum_{k \in S} \boldsymbol{H}_k^H \boldsymbol{H}_k \frac{P_{Tx}}{M_{Rx,k} N} \right|$$

with

$$\sum_{k \in S} M_{Rx,k} \leq M_{Tx}$$

or an estimated sum capacity $C_{sum}(S)$ according to

$$\lim_{P_{Tx} \to \infty} C_{sum}(S) \approx \log_2 \left| \boldsymbol{I} + \sum_{k \in S} \boldsymbol{H}_k^H \boldsymbol{H}_k \frac{P_{Tx}}{M_{Rx,k} N} \right|$$

with

$$\sum_{k \in S} M_{Rx,k} > M_{Tx} ,$$

or

$$C_{sum}(S) \approx \log_2 \left| \boldsymbol{I} + \sum_{k \in S} \boldsymbol{H}_k^H \boldsymbol{H}_k \frac{P_{Tx}}{M_{Rx,k} N} \right| \quad \text{for} \quad P_{Tx} < \infty ,$$

is optimized or maximized, where $M_{Rx,k}$ denotes a number of receive antennas of user $k$ , $P_{Tx}$ is the transmit power, $\boldsymbol{H}_k$ represents the MIMO radio channel matrix of user $k$, $\boldsymbol{I}$ is an identity matrix, $N$ represents the cardinality of $S$ and $M_{Tx}$ denotes the number of transmit antennas used for transmission.

**12.** The user selection apparatus (100) of one of the claims 7 to 11, wherein the selector (120) is adapted for selecting a user $\pi(l)$ for the intermediate selection group S having a MIMO radio channel represented by a MIMO radio channel matrix $\boldsymbol{H}_{\pi(l)}$ having a highest Frobenius norm of the users of the pre-selection group $\hat{S}$ according to

$$\pi(1) = \arg\max_{k \in \hat{S}} \left\| \boldsymbol{H}_k \right\|_F .$$

**13.** The user selection apparatus (100) of claim 12, wherein the selector (120) is adapted for adding a user $\pi(i)$ from non-selected users $k$ for the intermediate selection group S for which an increase in sum capacity or estimated sum capacity $\Delta C_{sum}(S \cup k)$ is the strongest, according to

$$\pi(i) = \arg\max_{k \in \hat{S} \setminus S} \Delta C_{sum}(S \cup k) ,$$

whereas

$$\Delta C_{sum}(S \cup k) = C_{sum}(S \cup k) - C_{sum}(S) ,$$

and the sum capacity $C_{sum}(S)$ is determined according to

$$\lim_{P_{Tx}\to\infty} C_{sum}(S) = \log_2\left|\boldsymbol{I} + \sum_{k\in S}\boldsymbol{H}_k^H\boldsymbol{H}_k\frac{P_{Tx}}{M_{Rx,k}N}\right|$$

with

$$\sum_{k\in S} M_{Rx,k} \le M_{Tx}$$

or an estimated sum capacity $C_{sum}(S)$ according to

$$\lim_{P_{Tx}\to\infty} C_{sum}(S) \approx \log_2\left|\boldsymbol{I} + \sum_{k\in S}\boldsymbol{H}_k^H\boldsymbol{H}_k\frac{P_{Tx}}{M_{Rx,k}N}\right|$$

with

$$\sum_{k\in S} M_{Rx,k} > M_{Tx},$$

or

$$C_{sum}(S) \approx \log_2\left|\boldsymbol{I} + \sum_{k\in S}\boldsymbol{H}_k^H\boldsymbol{H}_k\frac{P_{Tx}}{M_{Rx,k}N}\right| \quad \text{for} \quad P_{Tx} < \infty,$$

where $M_{Rx,k}$ denotes a number of receive antennas of user $k$, $P_{Tx}$ is the transmit power, $H_k$ represents the MIMO radio channel matrix of user $k$, $I$ is an identity matrix, $N$ represents the cardinality of $S$ and $M_{Tx}$ denotes a number of transmit antennas used for transmission.

**14.** Method for selecting a sub-group of users from a plurality of users for transmission in a mobile communication system, a user being adapted for communicating through a MIMO radio channel, **characterized by** the steps of:

de-selecting (200) a user having a transmission capacity measure which is higher than a transmission capacity measure of another user by a predetermined amount to obtain a pre-selection group not including the de-selected user, such that the pre-selection group comprises two users having two transmission capacity measures which are equal or different from each other by less than the pre-determined amount; and
determining the sub-group of users for transmission based on the MIMO radio channels.

**15.** The method of claim 14, wherein the step of de-selecting (200) comprises the steps of
receiving (205) a pre-determined size of the pre-selection group;
sorting (210) the plurality of users according to the Frobenius norms or the single user rates of their MIMO radio channel matrices representing their MIMO radio channels in decreasing order;
including (215) all users in the pre-selection group;
comparing (220) the Frobenius norm or the single user rate of the user with the highest Frobenius norm or the highest single user rate from the pre-selection group with the Frobenius norm or single user rate of the user having the second highest Frobenius norm or the second highest single user rate from the pre-selection group;
de-selecting (225) the user with the highest Frobenius norm or the highest single user rate from the pre-selection group and returning to the step of comparing (220) if the highest Frobenius norm or the highest single user rate is

higher than a factor multiplied by the second highest Frobenius norm or the second highest single user rate of the user from the pre-selection group; and
de-selecting (230) users with the lowest Frobenius norms or the lowest single user rates from the pre-selection group to match the pre-determined size.

**16.** The method of one of the claims 14 or 15, further comprising a step of selecting (250) users from the pre-selection group for an intermediate selection group of users based on a spatial property of the MIMO radio channels of the users of the pre-selection group, which is different from the transmission capacity measure and wherein the step of determining refers to determining the sub-group of users for transmission based on the MIMO radio channels of the users of the intermediate selection group and wherein the step of selecting (250) comprises the steps of
receiving (255) a pre-determined size of the intermediate selection group;
selecting (260) the user having the highest Frobenius norm or the highest single user rate from the pre-selection group;
evaluating (265) a capacity or a sum increase for non-selected users in the pre-selection group on the basis of the selected users in the intermediate selection group;
selecting (270) the user with the highest capacity or the highest sum rate increase for the intermediate selection group; and
returning to the step of evaluating (265) until the size of the intermediate selection group has reached the pre-determined size of the intermediate selection group.

**17.** Computer program having a program code for performing one of the methods of claims 14 to 16 when the program code runs on a processor.

## Patentansprüche

**1.** Eine Nutzerauswahlvorrichtung (100) zum Arbeiten in einem Mobilkommunikationssystem und zum Auswählen einer Untergruppe von Nutzern aus einer Mehrzahl von Nutzern für eine Übertragung, wobei ein Nutzer zum Kommunizieren durch einen mehrere Eingänge und mehrere Ausgänge umfassenden Funkkanal (MIMO-Funkkanal) (MIMO = multiple-input multiple-output) angepasst ist, wobei die Nutzerauswahlvorrichtung (100) durch Folgendes **gekennzeichnet** ist:

> einen Vorab-Auswähler (110) zum Abwählen eines Nutzers, der ein Übertragungskapazitätsmaß aufweist, das um einen vorbestimmten Betrag höher ist als ein Übertragungskapazitätsmaß eines anderen Nutzers, um eine Vorauswahlgruppe zu erhalten, die den abgewählten Nutzer nicht enthält, so dass die Vorauswahlgruppe zwei Nutzer umfasst, die zwei Übertragungskapazitätsmaße aufweisen, die identisch miteinander sind oder sich um weniger als den vorbestimmten Betrag voneinander unterscheiden; und
> einen Prozessor (115) zum Bestimmen der Untergruppe von Nutzern für eine Übertragung auf der Basis der MIMO-Funkkanäle.

**2.** Die Nutzerauswahlvorrichtung (100) gemäß Anspruch 1, bei der der Vorab-Auswähler (110) zum Bestimmen des Übertragungskapazitätsmaßes anhand einer höchsten erreichbaren Datenrate eines räumlichen Unterkanals des MIMO-Funkkanals eines Nutzers angepasst ist, und bei der der vorbestimmte Betrag relativ oder absolut ist.

**3.** Die Nutzerauswahlvorrichtung (100) gemäß Anspruch 1 oder 2, bei der der Vorab-Auswähler (110) zum Bestimmen eines Übertragungskapazitätsmaßes durch Auswerten einer Singulärwertzerlegung einer MIMO-Funkkanalmatrix eines Nutzers, die den MIMO-Funkkanal des Nutzers darstellt, angepasst ist, bei der der Vorab-Auswähler (110) zum Bestimmen des Übertragungskapazitätsmaßes anhand des höchsten Singulärwerts einer MIMO-Funkkanalmatrix eines Nutzers angepasst ist.

**4.** Die Nutzerauswahlvorrichtung (100) gemäß einem der Ansprüche 1 bis 3, bei der der Vorab-Auswähler (110) zum Bestimmen des Übertragungskapazitätsmaßes anhand einer Frobenius-Norm einer MIMO-Funkkanalmatrix eines Nutzers, die den MIMO-Funkkanal des Nutzers darstellt, angepasst ist.

**5.** Die Nutzerauswahlvorrichtung (100) gemäß einem der Ansprüche 1 bis 4, bei der der Vorab-Auswähler (110) zum Sortieren der Nutzer nach ihren Übertragungskapazitätsmaßen und zum Vergleichen eines Übertragungskapazitätsmaßes eines Nutzers mit dem Übertragungskapazitätsmaß eines anderen Nutzers angepasst ist, wobei der andere Nutzer innerhalb der Mehrzahl von Nutzern das nächstniedrigere oder das nächsthöhere Übertragungskapazitätsmaß aufweist.

**6.** Die Nutzerauswahlvorrichtung (100) gemäß einem der Ansprüche 1 bis 5, bei der der Vorab-Auswähler (110) zum Bestimmen der Nutzer der Vorauswahlgruppe durch Auswählen, aus der Mehrzahl von Nutzern, einer vorbestimmten Anzahl von Nutzern, die begrenzte Differenzen ihrer Übertragungskapazitätsmaße auf ihren MIMO-Funkkanälen aufweisen und die die höchsten Übertragungskapazitätsmaße mit begrenzten Unterschieden innerhalb der Mehrzahl von Nutzern aufweisen, angepasst ist.

**7.** Die Nutzerauswahlvorrichtung (100) gemäß einem der Ansprüche 1 bis 6, die ferner einen Auswähler (120) zum Auswählen von Nutzern aus der Vorauswahlgruppe für eine Zwischenauswahlgruppe auf der Basis einer räumlichen Eigenschaft der MIMO-Funkkanäle der Nutzer der Vorauswahlgruppe, die sich von dem Übertragungskapazitätsmaß unterscheidet, umfasst, und bei der der Prozessor (115) zum Bestimmen der Untergruppe von Nutzern für eine Übertragung auf der Basis der MIMO-Funkkanäle der Nutzer der Zwischenauswahlgruppe angepasst ist.

**8.** Die Nutzerauswahlvorrichtung (100) gemäß Anspruch 7, bei der der Auswähler (120) zum Auswählen von Nutzern aus der Vorauswahlgruppe für die Zwischenauswahlgruppe gemäß einer kombinierten Übertragungskapazität und/oder räumlichen Kompatibilität der Nutzer der Zwischenauswahlgruppe angepasst ist.

**9.** Die Nutzerauswahlvorrichtung (100) gemäß Anspruch 8, bei der der Auswähler (120) zum Auswählen, für die Zwischenauswahlgruppe, eines Nutzers aus der Vorauswahlgruppe angepasst ist, für die die Nutzer der Zwischenauswahlgruppe ein höheres kombiniertes Übertragungskapazitätsmaß aufweisen als der Nutzer mit dem höchsten Übertragungskapazitätsmaß in der Vorauswahlgruppe.

**10.** Die Nutzerauswahlvorrichtung (100) gemäß Anspruch 9, bei der der Auswähler (120) zum Auswählen einer vorbestimmten Anzahl $|S|$ von Nutzern aus der Vorauswahlgruppe für die Zwischenauswahlgruppe $S$ angepasst ist, wobei der MIMO-Funkkanal eines Nutzers $k$ durch eine MIMO-Funkkanalmatrix $\boldsymbol{H}_k$ dargestellt wird und wobei für die Nutzer der Zwischenauswahlgruppe S eine Determinante

$$\left|\sum_{k\in S}\boldsymbol{H}_k^H\boldsymbol{H}_k\right|$$

auf der Basis von Permutationen von $|S|$ Nutzern in der Vorauswahlgruppe optimiert oder maximiert ist.

**11.** Die Nutzerauswahlvorrichtung (100) gemäß einem der Ansprüche 7 bis 10, bei der der Auswähler (120) zum Auswählen, für die Zwischenauswahlgruppe $S$, von Nutzern $k$ aus der Vorauswahlgruppe $\hat{S}$ angepasst ist, für die eine kombinierte Übertragungskapazität anhand einer Summenkapazität $C_{Summe}$ $(S)$ gemäß

$$\lim_{P_{Tx}\to\infty} C_{Summe}(S)=\log_2\left|\mathbf{I}+\sum_{k\in S}\mathbf{H}_k^H\mathbf{H}_k\,\frac{P_{Tx}}{M_{Rx,k}N}\right|$$

mit

$$\sum_{k\in S} M_{Rx,k}\le M_{Tx}$$

oder eine geschätzte Summenkapazität $C_{Summe}$ $(S)$ gemäß

$$\lim_{P_{Tx}\to\infty} C_{Summe}(S) \approx \log_2 \left| \mathbf{I} + \sum_{k\in S} \mathbf{H}_k^H \mathbf{H}_k \frac{P_{Tx}}{M_{Rx,k} N} \right|$$

mit

$$\sum_{k\in S} M_{Rx,k} > M_{Tx},$$

oder

$$C_{Summe}(S) \approx \log_2 \left| \mathbf{I} + \sum_{k\in S} \mathbf{H}_k^H \mathbf{H}_k \frac{P_{Tx}}{M_{Rx,k} N} \right| \text{ für } P_{Tx} < \infty,$$

optimiert oder maximiert ist, wobei $M_{Rx,k}$ eine Anzahl von Empfangsantennen eines Nutzers $k$ bezeichnet, $P_{Tx}$ die Sendeleistung ist, $H_k$ die MIMO-Funkkanalmatrix des Nutzers $k$ darstellt, $\boldsymbol{I}$ eine Identitätsmatrix ist, $N$ die Kardinalität von $S$ darstellt und $M_{Tx}$ die Anzahl von zur Übertragung verwendeten Sendeantennen bezeichnet.

**12.** Die Nutzerauswahlvorrichtung (100) gemäß einem der Ansprüche 7 bis 11, bei der der Auswähler (120) zum Auswählen eines Nutzers π(l) für die Zwischenauswahlgruppe S angepasst ist, der einen MIMO-Funkkanal aufweist, der durch eine MIMO-Funkkanalmatrix $\boldsymbol{H}_{\pi(l)}$ dargestellt ist, die eine höchste Frobenius-Norm der Nutzer der Vorauswahlgruppe $\hat{S}$ aufweist, gemäß

$$\pi(1) = \arg\max_{k\in\hat{S}} \|\mathbf{H}_k\|_F .$$

**13.** Die Nutzerauswahlvorrichtung (100) gemäß Anspruch 12, bei der der Auswähler (120) zum Addieren eines Nutzers $\pi(i)$ von nicht-ausgewählten Nutzern $k$ für die Zwischenauswahlgruppe $S$ angepasst ist, für die eine Zunahme der Summenkapazität oder geschätzten Summenkapazität $\Delta C_{Summe}(S \cup k)$ am stärksten ist, gemäß

$$\pi(i) = \arg\max_{k\in\hat{S}\setminus S} \Delta C_{Summe}(S \cup k),$$

wohingegen

$$\Delta C_{Summe}(S \cup k) = C_{Summe}(S \cup k) - C_{Summe}(S),$$

und die Summenkapazität $C_{Summe}(S)$ gemäß

$$\lim_{P_{Tx}\to\infty} C_{Summe}(S) = \log_2 \left| \mathbf{I} + \sum_{k\in S} \mathbf{H}_k^H \mathbf{H}_k \frac{P_{Tx}}{M_{Rx,k} N} \right|$$

mit

$$\sum_{k\in S} M_{Rx,k} \le M_{Tx}$$

bestimmt wird, oder eine geschätzte Summenkapazität $C_{Summe}(S)$ gemäß

$$\lim_{P_{Tx}\to\infty} C_{Summe}(S) \approx \log_2 \left| \mathbf{I} + \sum_{k\in S} \mathbf{H}_k^H \mathbf{H}_k \frac{P_{Tx}}{M_{Rx,k}N} \right|$$

mit

$$\sum_{k\in S} M_{Rx,k} > M_{Tx},$$

oder

$$C_{Summe}(S) \approx \log_2 \left| \mathbf{I} + \sum_{k\in S} \mathbf{H}_k^H \mathbf{H}_k \frac{P_{Tx}}{M_{Rx,k}N} \right| \text{ für } P_{Tx} < \infty,$$

wobei $M_{Rx,k}$ eine Anzahl von Empfangsantennen des Nutzers $k$ bezeichnet, $P_{Tx}$ die Sendeleistung ist, $H_k$ die MIMO-Funkkanalmatrix des Nutzers $k$ darstellt, $I$ eine Identitätsmatrix ist, $N$ die Kardinalität von $S$ darstellt und $M_{Tx}$ eine Anzahl von zur Übertragung verwendeten Sendeantennen bezeichnet.

**14.** Verfahren zum Auswählen einer Untergruppe von Nutzern aus einer Mehrzahl von Nutzern für eine Übertragung in einem Mobilkommunikationssystem, wobei ein Nutzer zum Kommunizieren durch einen MIMO-Funkkanal angepasst ist, wobei das Verfahren durch folgende Schritte **gekennzeichnet** ist:

Abwählen (200) eines Nutzers, der ein Übertragungskapazitätsmaß aufweist, das um einen vorbestimmten Betrag höher ist als ein Übertragungskapazitätsmaß eines anderen Nutzers, um eine Vorauswahlgruppe zu erhalten, die den abgewählten Nutzer nicht enthält, so dass die Vorauswahlgruppe zwei Nutzer umfasst, die zwei Übertragungskapazitätsmaße aufweisen, die identisch miteinander sind oder sich um weniger als den vorbestimmten Betrag voneinander unterscheiden; und
Bestimmen der Untergruppe von Nutzern für eine Übertragung auf der Basis der MIMO-Funkkanäle.

**15.** Das Verfahren gemäß Anspruch 14, bei dem der Schritt des Abwählens (200) folgende Schritte umfasst:

Empfangen (205) einer vorbestimmten Größe einer Vorauswahlgruppe;
Sortieren (210) der Mehrzahl von Nutzern nach den Frobenius-Normen oder den Einzelnutzerraten ihrer MIMO-Funkkanalmatrizen, die ihre MIMO-Funkkanäle darstellen, in absteigender Reihenfolge;
Aufnehmen (215) aller Nutzer in die Vorauswahlgruppe;
Vergleichen (220) der Frobenius-Norm oder der Einzelnutzerrate des Nutzers mit der höchsten Frobenius-Norm oder der höchsten Einzelnutzerrate aus der Vorauswahlgruppe mit der Frobenius-Norm oder Einzelnutzerrate des Nutzers, der die zweithöchste Frobenius-Norm oder die zweithöchste Einzelnutzerrate aus der Vorauswahlgruppe aufweist;
Abwählen (225) des Nutzers mit der höchsten Frobenius-Norm oder der höchsten Einzelnutzerrate aus der Vorauswahlgruppe und Zurückkehren zu dem Schritt des Vergleichens (220), falls die höchste Frobenius-Norm oder die höchste Einzelnutzerrate höher ist als ein Faktor, der mit der zweithöchsten Frobenius-Norm oder der zweithöchsten Einzelnutzerrate des Nutzers aus der Vorauswahlgruppe multipliziert wird; und
Abwählen (230) von Nutzern mit den niedrigsten Frobenius-Normen oder den niedrigsten Einzelnutzerraten aus der Vorauswahlgruppe, um eine Anpassung an die vorbestimmte Größe zu erreichen.

**16.** Das Verfahren gemäß einem der Ansprüche 14 oder 15, das ferner einen Schritt des Auswählens (250) von Nutzern aus der Vorauswahlgruppe für eine Zwischenauswahlgruppe von Nutzern auf der Basis einer räumlichen Eigenschaft

der MIMO-Funkkanäle der Nutzer der Vorauswahlgruppe, die sich von dem Übertragungskapazitätsmaß unterscheidet, umfasst, und bei dem sich der Schritt des Bestimmens auf das Bestimmen der Untergruppe von Nutzern für eine Übertragung auf der Basis der MIMO-Funkkanäle der Nutzer der Zwischenauswahlgruppe bezieht, und bei dem der Schritt des Auswählens (250) folgende Schritte umfasst:

Empfangen (255) einer vorbestimmten Größe der Zwischenauswahlgruppe;
Auswählen (260) des Nutzers, der die höchste Frobenius-Norm oder die höchste Einzelnutzerrate aufweist, aus der Vorauswahlgruppe;
Auswerten (265) einer Kapazität oder einer Summenerhöhung für nicht-ausgewählte Nutzer in der Vorauswahlgruppe auf der Basis der ausgewählten Nutzer in der Zwischenauswahlgruppe;
Auswählen (270) des Nutzers mit der höchsten Kapazität oder der höchsten Summenratenerhöhung für die Zwischenauswahlgruppe; und
Zurückkehren zu dem Schritt des Auswertens (265), bis die Größe der Zwischenauswahlgruppe die vorbestimmte Größe der Zwischenauswahlgruppe erreicht hat.

**17.** Computerprogramm, das einen Programmcode zum Durchführen eines der Verfahren gemäß den Ansprüchen 14 bis 16 aufweist, wenn der Programmcode auf einem Prozessor abläuft.

## Revendications

**1.** Appareil de sélection d'utilisateur (100) destiné à être opérationnel dans un système de communication mobile et à sélectionner un sous-groupe d'utilisateurs parmi une pluralité d'utilisateurs pour transmission, un utilisateur étant adapté pour communiquer via un canal de radiocommunication à entrées multiples sorties multiples (MIMO = Multiple-Input-Multiple-Output), l'appareil de sélection d'utilisateur (100) étant **caractérisé par**:

un présélecteur (110) pour désélectionner un utilisateur présentant une mesure de capacité de transmission qui est supérieure d'une quantité prédéterminée à une mesure de capacité de transmission d'un autre utilisateur, pour obtenir un groupe de présélection n'incluant pas l'utilisateur désélectionné, de sorte que le groupe de présélection comprenne deux utilisateurs présentant deux mesures de capacité de transmission qui sont égales ou différentes l'une de l'autre de moins de la quantité prédéterminée; et
un processeur (115) pour déterminer le sous-groupe d'utilisateurs pour transmission sur base des canaux de radiocommunication MIMO.

**2.** Appareil de sélection d'utilisateur (100) selon la revendication 1, dans lequel le présélecteur (110) est adapté pour déterminer la mesure de capacité de transmission en termes d'un débit de données le plus élevé pouvant être obtenu d'un sous-canal spatial d'utilisateur du canal de radiocommunication MIMO et dans lequel la quantité prédéterminée est relative ou absolue.

**3.** Appareil de sélection d'utilisateur (100) selon la revendication 1 ou 2, dans lequel le présélecteur (110) est adapté pour déterminer une mesure de capacité de transmission en évaluant une décomposition en valeurs singulières d'une matrice de canal de radiocommunication MIMO de l'utilisateur représentant le canal de radiocommunication MIMO de l'utilisateur, dans lequel le présélecteur (110) est adapté pour déterminer la mesure de capacité de transmission en termes de la valeur singulière la plus élevée d'une matrice de canal de radiocommunication MIMO de l'utilisateur.

**4.** Appareil de sélection d'utilisateur (100) selon l'une des revendications 1 à 3, dans lequel le présélecteur (110) est adapté pour déterminer la mesure de capacité de transmission en termes d'une norme de Frobenius d'une matrice de canal de radiocommunication MIMO de l'utilisateur représentant le canal de radiocommunication MIMO de l'utilisateur.

**5.** Appareil de sélection d'utilisateur (100) selon l'une des revendications 1 à 4, dans lequel le présélecteur (110) est adapté pour trier les utilisateurs selon leurs mesures de capacité de transmission et pour comparer une mesure de capacité de transmission de l'utilisateur à la mesure de capacité de transmission d'un autre utilisateur, l'autre utilisateur présentant la mesure de capacité de transmission immédiatement inférieure ou immédiatement supérieure parmi la pluralité d'utilisateurs.

**6.** Appareil de sélection d'utilisateur (100) selon l'une des revendications 1 à 5, dans lequel le présélecteur (110) est

adapté pour déterminer les utilisateurs du groupe de présélection en sélectionnant parmi la pluralité d'utilisateurs un nombre prédéterminé d'utilisateurs présentant des différences limitées dans leurs mesures de capacité de transmission sur leurs canaux de radiocommunication MIMO et présentant les mesures de capacité de transmission les plus élevées avec des différences limitées parmi la pluralité d'utilisateurs.

**7.** Appareil de sélection d'utilisateur (100) selon l'une des revendications 1 à 6, comprenant par ailleurs un sélecteur (120) pour sélectionner les utilisateurs parmi le groupe de présélection pour un groupe de sélection intermédiaire sur base d'une propriété spatiale des canaux de radiocommunication MIMO des utilisateurs du groupe de présélection qui est différente de la mesure de capacité de transmission, et dans lequel le processeur (115) est adapté pour déterminer le sous-groupe d'utilisateurs pour transmission sur base des canaux de radiocommunication MIMO des utilisateurs du groupe de sélection intermédiaire.

**8.** Appareil de sélection d'utilisateur (100) selon la revendication 7, dans lequel le sélecteur (120) est adapté pour sélectionner les utilisateurs parmi le groupe de présélection pour un groupe de sélection intermédiaire selon une capacité de transmission combinée et/ou la compatibilité spatiale des utilisateurs du groupe de sélection intermédiaire.

**9.** Appareil de sélection d'utilisateur (100) selon la revendication 8, dans lequel le sélecteur (120) est adapté pour sélectionner pour le groupe de sélection intermédiaire un utilisateur parmi le groupe de présélection pour lequel les utilisateurs du groupe de sélection intermédiaire présentent une mesure de capacité de transmission combinée plus grande que l'utilisateur à la mesure de capacité de transmission la plus élevée parmi le groupe de présélection.

**10.** Appareil de sélection d'utilisateur (100) selon la revendication 9, dans lequel le sélecteur (120) est adapté pour sélectionner un nombre prédéterminé $|S|$ d'utilisateurs parmi le groupe de présélection pour le groupe de sélection intermédiaire $S$, dans lequel le canal de radiocommunication MIMO d'un utilisateur $k$ est représenté par une matrice de canaux de radiocommunication MIMO $H_k$ et dans lequel pour les utilisateurs du groupe de sélection intermédiaire $S$ un déterminant

$$\left|\sum_{k\in S} H_k^H H_k\right|$$

est optimisé ou maximisé sur base de permutations de $|S|$ utilisateurs parmi le groupe de présélection.

**11.** Appareil de sélection d'utilisateur (100) selon l'une des revendications 7 à 10, dans lequel le sélecteur (120) est adapté pour sélectionner pour le groupe de sélection intermédiaire $S$ des utilisateurs $k$ du groupe de présélection $\hat{S}$ pour lesquels une capacité de transmission combinée en termes d'une capacité de somme $C_{sum}(S)$, selon

$$\lim_{P_{Tx}\to\infty} C_{sum}(S) = \log_2\left|I + \sum_{k\in S} H_k^H H_k \frac{P_{Tx}}{M_{Rx,k}N}\right|$$

avec

$$\sum_{k\in S} M_{Rx,k} \le M_{Tx}$$

ou une capacité de somme estimée $C_{sum}(S)$ selon

$$\lim_{P_{Tx}\to\infty} C_{sum}(S) \approx \log_2 \left| I + \sum_{k\in S} H_k^H H_k \frac{P_{Tx}}{M_{Rx,k} N} \right|$$

avec

$$\sum_{k\in S} M_{Rx,k} > M_{Tx} \,,$$

ou

$$C_{sum}(S) \approx \log_2 \left| I + \sum_{k\in S} H_k^H H_k \frac{P_{Tx}}{M_{Rx,k} N} \right| \text{ pour } P_{Tx} < \infty \,,$$

est optimisée ou maximisée, ou $M_{Rx,k}$ désigne un nombre d'antennes de réception de l'utilisateur *k*, $P_{Tx}$ est la puissance de transmission, $H_k$ représente la matrice de canal de radiocommunication MIMO de l'utilisateur *k*, *I* est une matrice d'identité, *N* représente la cardinalité de *S* et $M_{Tx}$ désigne le nombre d'antennes de transmission utilisées pour la transmission.

**12.** Appareil de sélection d'utilisateur (100) selon l'une des revendications 7 à 11, dans lequel le sélecteur (120) est adapté pour sélectionner un utilisateur $\pi(l)$ pour le groupe de sélection intermédiaire *S* présentant un canal de radiocommunication MIMO représenté par une matrice de canal de radiocommunication MIMO $H\pi_{(1)}$ ayant une norme de Frobenius la plus élevée des utilisateurs du groupe de présélection $\hat{S}$ selon

$$\pi(1) = \arg\max_{k\in\hat{S}} \|H_k\|_F \,.$$

**13.** Appareil de sélection d'utilisateur (100) selon la revendication 12, dans lequel le sélecteur (120) est adapté pour ajouter un utilisateur $\pi(i)$ parmi les utilisateurs non sélectionnés *k* pour le groupe de sélection intermédiaire *S* pour lequel une augmentation de la capacité de somme ou de la capacité de somme estimée $\Delta C_{sum}(S \cup k)$ est la plus forte, selon

$$\pi(i) = \arg\max_{k\in\hat{S}\setminus S} \Delta C_{sum}(S \cup k),$$

tandis que

$$\Delta C_{sum}(S \cup k) = C_{sum}(S \cup k) - C_{sum}(S)\,,$$

et la capacité de somme $C_{sum}$ (S) est déterminée selon

$$\lim_{P_{Tx}\to\infty} C_{sum}(S) = \log_2 \left| I + \sum_{k\in S} H_k^H H_k \frac{P_{Tx}}{M_{Rx,k} N} \right|$$

avec

$$\sum_{k\in S} M_{Rx,k} \leq M_{Tx}$$

ou une capacité de somme estimée $C_{sum}(S)$ selon

$$\lim_{P_{Tx}\to\infty} C_{sum}(S) \approx \log_2 \left| I + \sum_{k\in S} H_k^H H_k \frac{P_{Tx}}{M_{Rx,k} N} \right|$$

avec

$$\sum_{k\in S} M_{Rx,k} > M_{Tx} ,$$

ou

$$C_{sum}(S) \approx \log_2 \left| I + \sum_{k\in S} H_k^H H_k \frac{P_{Tx}}{M_{Rx,k} N} \right| \text{ pour } P_{Tx} < \infty ,$$

où $M_{Rx,k}$ désigne un nombre d'antennes de réception de l'utilisateur $k$, $P_{Tx}$, est la puissance de transmission, $H_k$ représente la matrice de canal de radiocommunication MIMO de l'utilisateur $k$, $I$ est une matrice d'identité, $N$ représente la cardinalité de $S$ et $M_{Tx}$ désigne un nombre d'antennes de transmission utilisées pour la transmission.

**14.** Procédé de sélection d'un sous-groupe d'utilisateurs parmi une pluralité d'utilisateurs pour transmission dans un système de communication mobile, un utilisateur étant adapté pour communiquer via un canal de radiocommunication MIMO, **caractérisé par** les étapes consistant à:

désélectionner (200) un utilisateur présentant une mesure de capacité de transmission qui est supérieure d'une quantité prédéterminée à une mesure de capacité de transmission d'un autre utilisateur, pour obtenir un groupe de présélection n'incluant pas l'utilisateur désélectionné, de sorte que le groupe de présélection comprenne deux utilisateurs présentant deux mesures de capacité de transmission qui sont égales ou différentes l'une de l'autre de moins de la quantité prédéterminée; et
déterminer le sous-groupe d'utilisateurs pour transmission sur base des canaux de radiocommunication MIMO.

**15.** Procédé selon la revendication 14, dans lequel l'étape de désélection (200) comprend les étapes consistant à recevoir (205) une grandeur prédéterminée du groupe de présélection;
trier (210) la pluralité d'utilisateurs selon les normes de Frobenius ou les taux d'utilisateur individuel de leurs matrices de canal de radiocommunication MIMO représentant leurs canaux de radiocommunication MIMO dans l'ordre décroissant;
inclure (215) tous les utilisateurs dans le groupe de présélection;

comparer (220) la norme de Frobenius ou le taux d'utilisateur individuel de l'utilisateur à la norme de Frobenius la plus élevée ou au taux d'utilisateur individuel le plus élevé parmi le groupe de présélection à la norme de Frobenius ou au taux d'utilisateur individuel de l'utilisateur présentant la deuxième norme de Frobenius la plus élevée ou le deuxième taux d'utilisateur individuel le plus élevé parmi le groupe de présélection;
désélectionner (225) l'utilisateur à la norme de Frobenius la plus élevée ou le taux d'utilisateur individuel le plus élevé parmi le groupe de présélection et retourner à l'étape de comparaison (220) si la norme de Frobenius la plus élevée ou le taux d'utilisateur individuel le plus élevé est supérieur à un facteur multiplié par la deuxième norme de Frobenius la plus élevée ou le deuxième taux d'utilisateur individuel le plus élevé de l'utilisateur parmi le groupe de présélection; et
désélectionner (230) les utilisateurs aux normes de Frobenius les plus basses ou aux taux d'utilisateur individuel les plus bas parmi le groupe de présélection, pour coïncider avec la grandeur prédéterminé.

**16.** Procédé selon l'une des revendications 14 ou 15, comprenant par ailleurs une étape consistant à sélectionner (250) des utilisateurs parmi le groupe de présélection pour un groupe de sélection intermédiaire d'utilisateurs sur base d'une propriété spatiale des canaux de radiocommunication MIMO des utilisateurs du groupe de présélection qui est différente de la mesure de capacité de transmission et dans lequel l'étape consistant à déterminer se réfère au fait de déterminer le sous-groupe d'utilisateurs pour transmission sur base des canaux de radiocommunication MIMO des utilisateurs du groupe de sélection intermédiaire et dans lequel l'étape de sélection (250) comprend les étapes consistant à
recevoir (255) une grandeur prédéterminée du groupe de sélection intermédiaire;
sélectionner (260) l'utilisateur présentant la norme de Frobenius la plus élevée ou le taux d'utilisateur individuel le plus élevé parmi le groupe de présélection;
évaluer (265) une augmentation de capacité ou de somme pour les utilisateurs non sélectionnés dans le groupe de présélection sur base des utilisateurs sélectionnés dans le groupe de sélection intermédiaire;
sélectionner (270) l'utilisateur à l'augmentation de capacité la plus élevée ou de taux de somme la plus élevée pour le groupe de sélection intermédiaire; et
retourner à l'étape consistant à évaluer (265) jusqu'à ce que la grandeur du groupe de sélection intermédiaire ait atteint la grandeur prédéterminée du groupe de sélection intermédiaire.

**17.** Programme d'ordinateur ayant un code de programme pour réaliser l'un des procédés selon les revendications 14 à 16 lorsque le code de programme est exécuté sur un processeur.

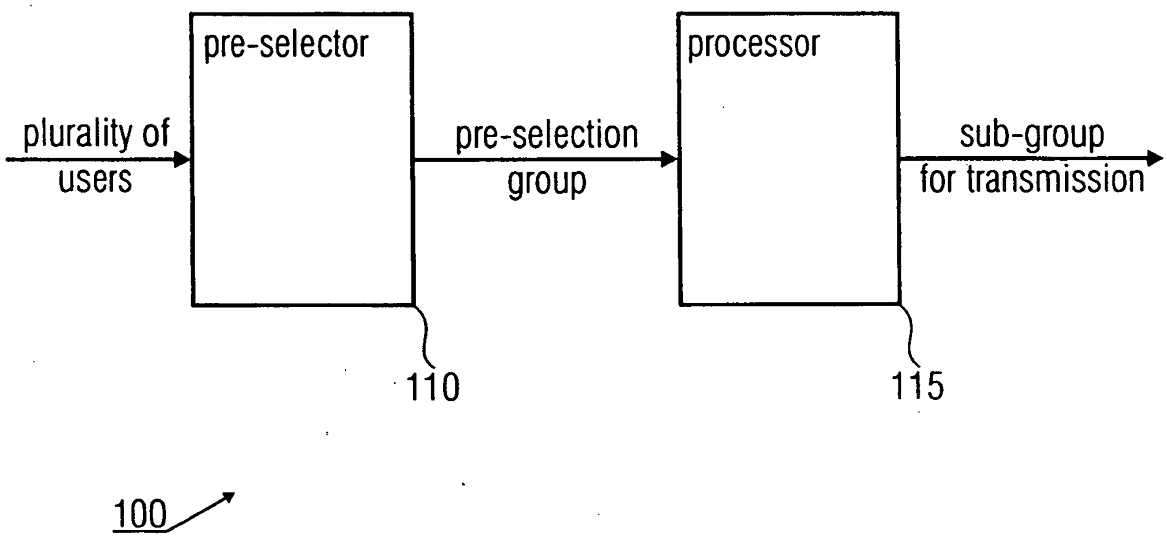
pre-selector
processor
plurality of users
pre-selection group
sub-group for transmission
110
115
100

FIG 1A

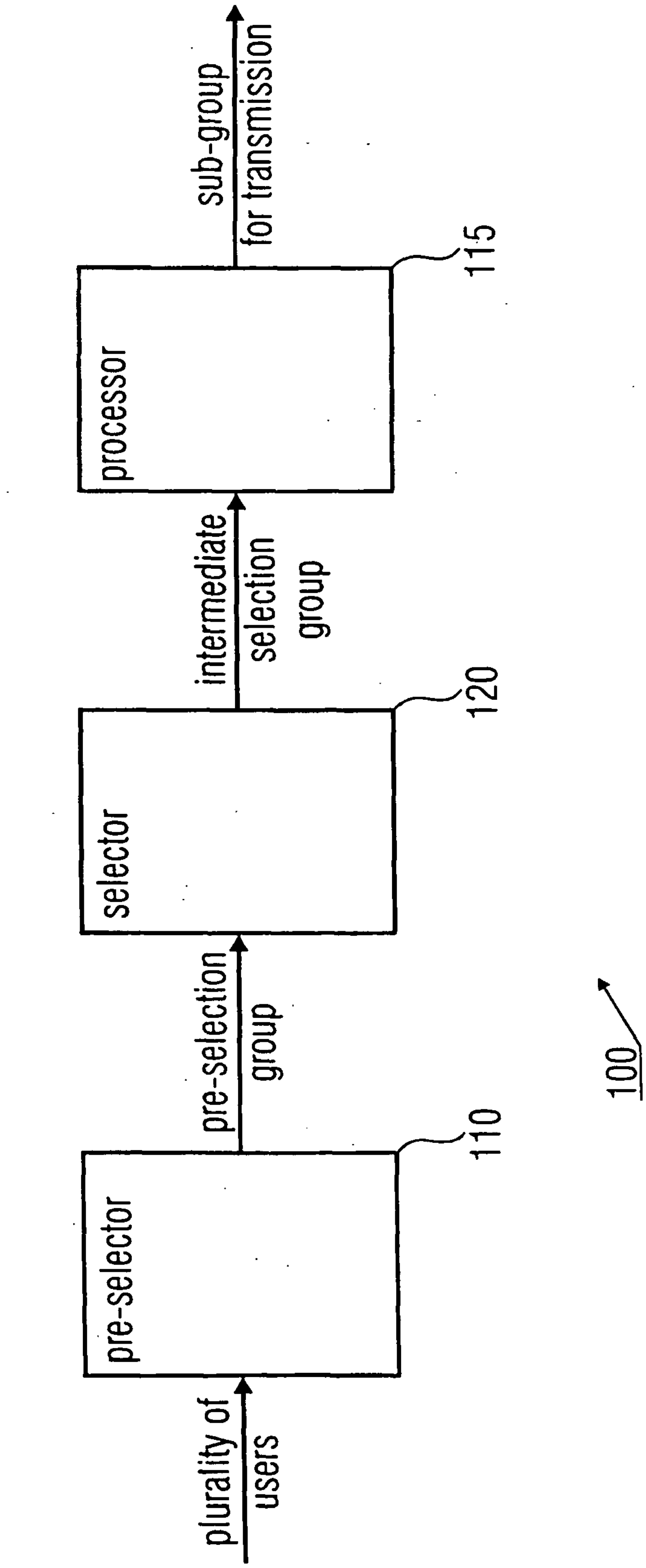
plurality of users
pre-selector
110
pre-selection group
selector
120
intermediate selection group
processor
115
sub-group for transmission
100

FIG 1B

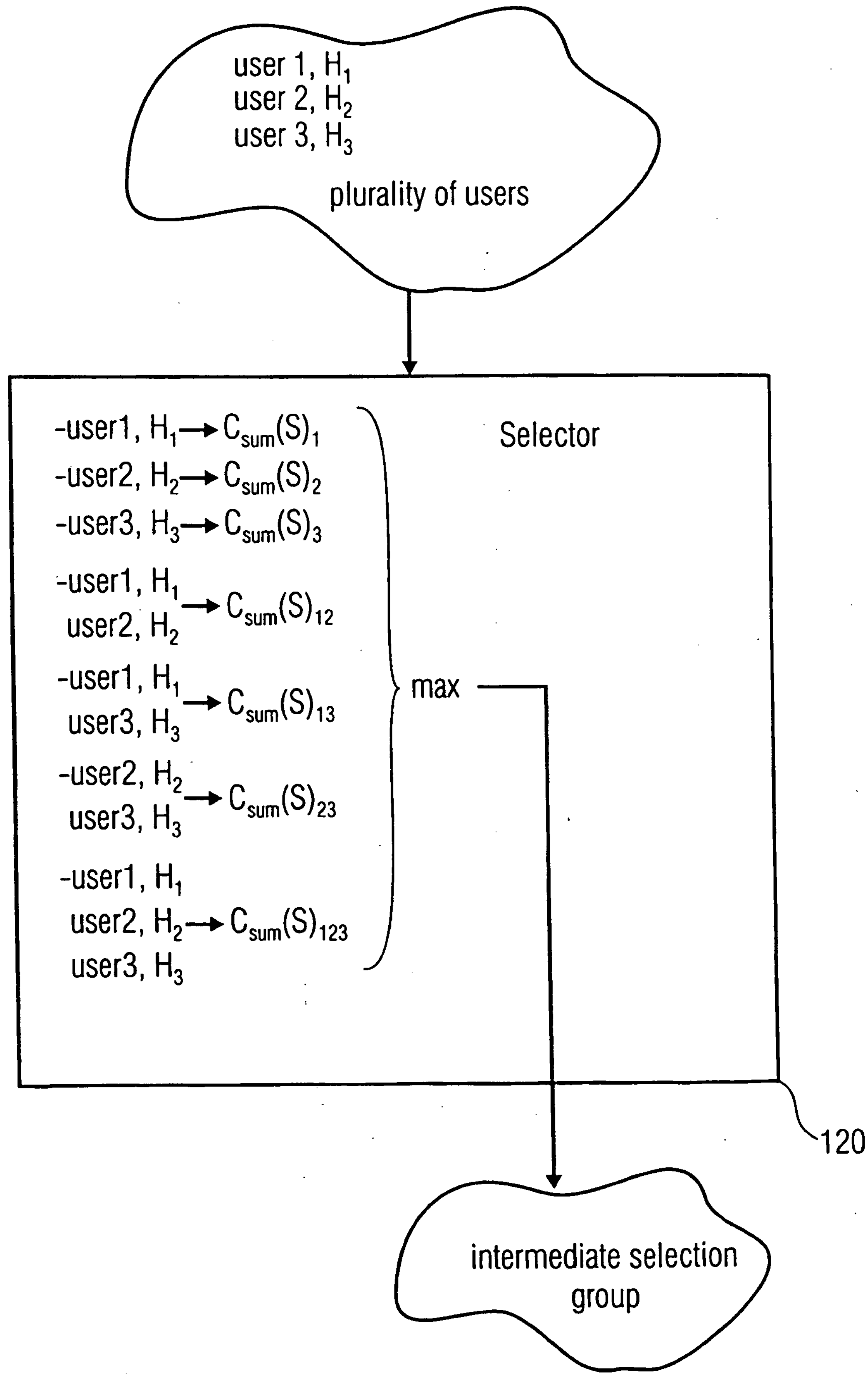
user 1, H1
user 2, H2
user 3, H3
plurality of users
Selector
-user1, H1 → Csum(S)1
-user2, H2 → Csum(S)2
-user3, H3 → Csum(S)3
-user1, H1
user2, H2 → Csum(S)12
-user1, H1
user3, H3 → Csum(S)13
-user2, H2
user3, H3 → Csum(S)23
-user1, H1
user2, H2 → Csum(S)123
user3, H3
max
120
intermediate selection
group

FIG 1C

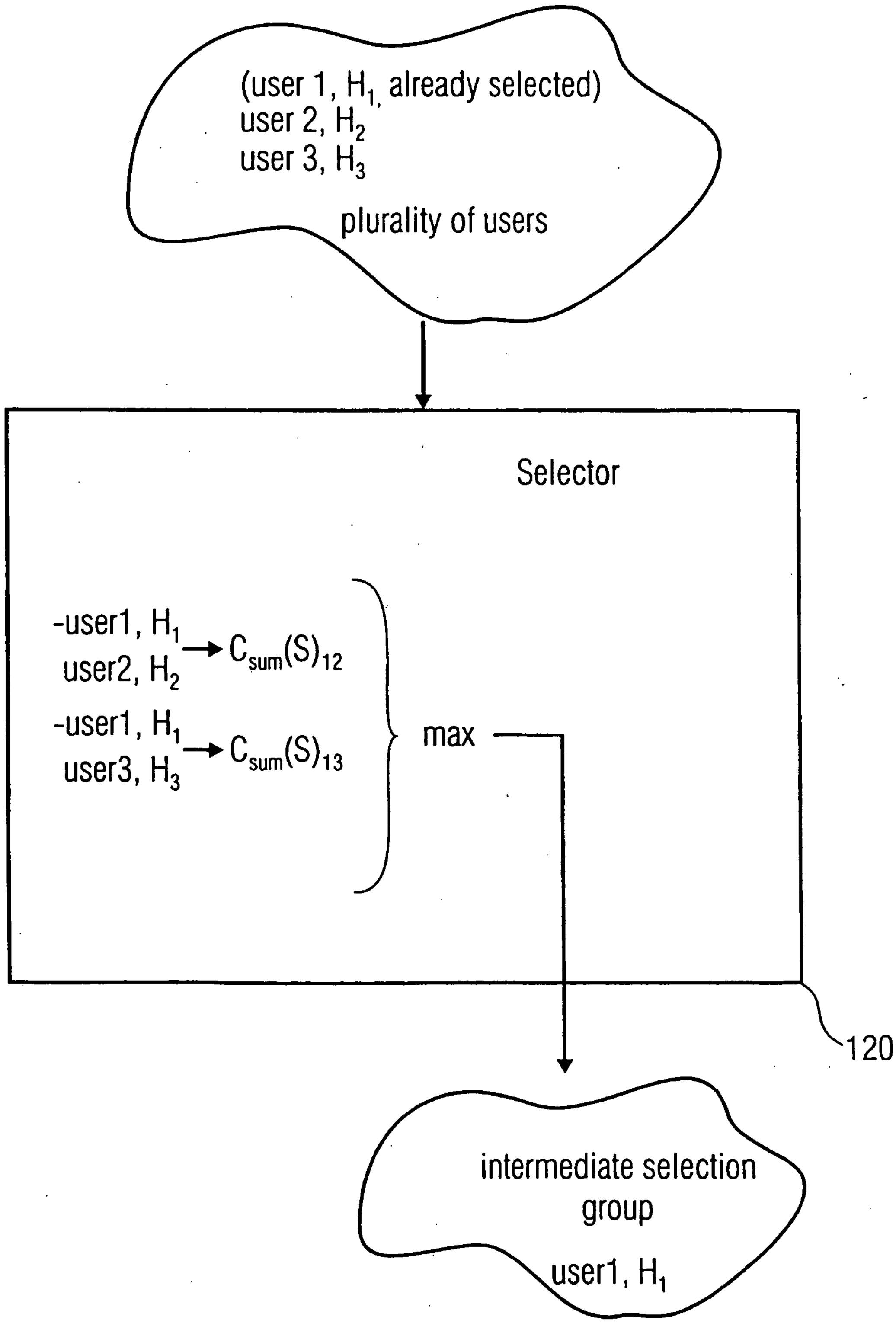
(user 1, $H_1$, already selected)
user 2, $H_2$
user 3, $H_3$
plurality of users
Selector
-user1, $H_1$
user2, $H_2$
$C_{sum}(S)_{12}$
-user1, $H_1$
user3, $H_3$
$C_{sum}(S)_{13}$
max
120
intermediate selection group
user1, $H_1$

FIG 1D

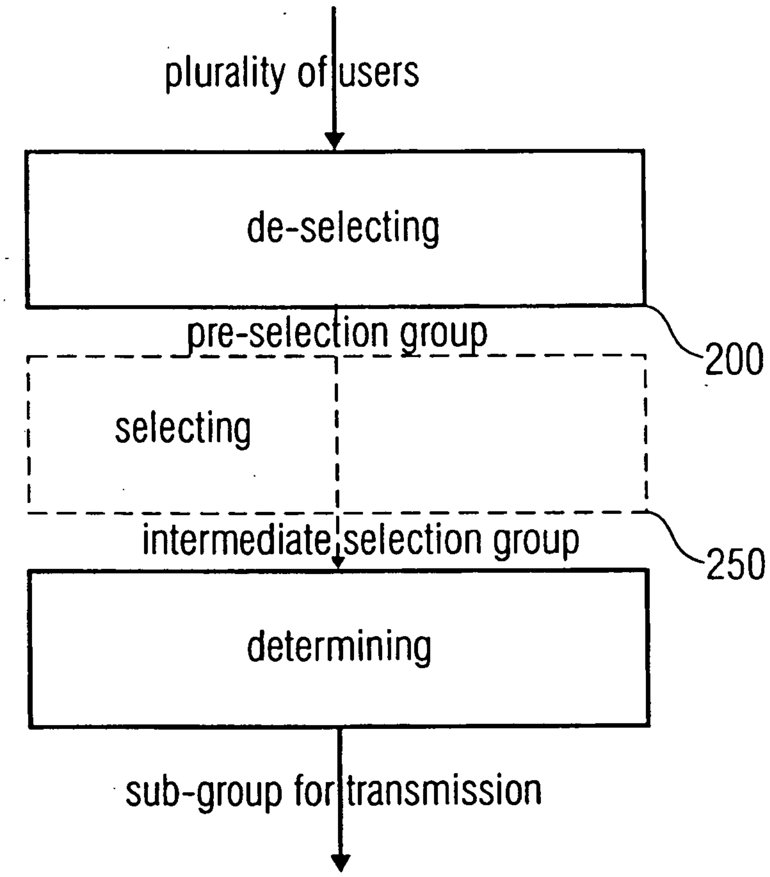
plurality of users
de-selecting
pre-selection group
200
selecting
intermediate selection group
250
determining
sub-group for transmission

FIG 2A

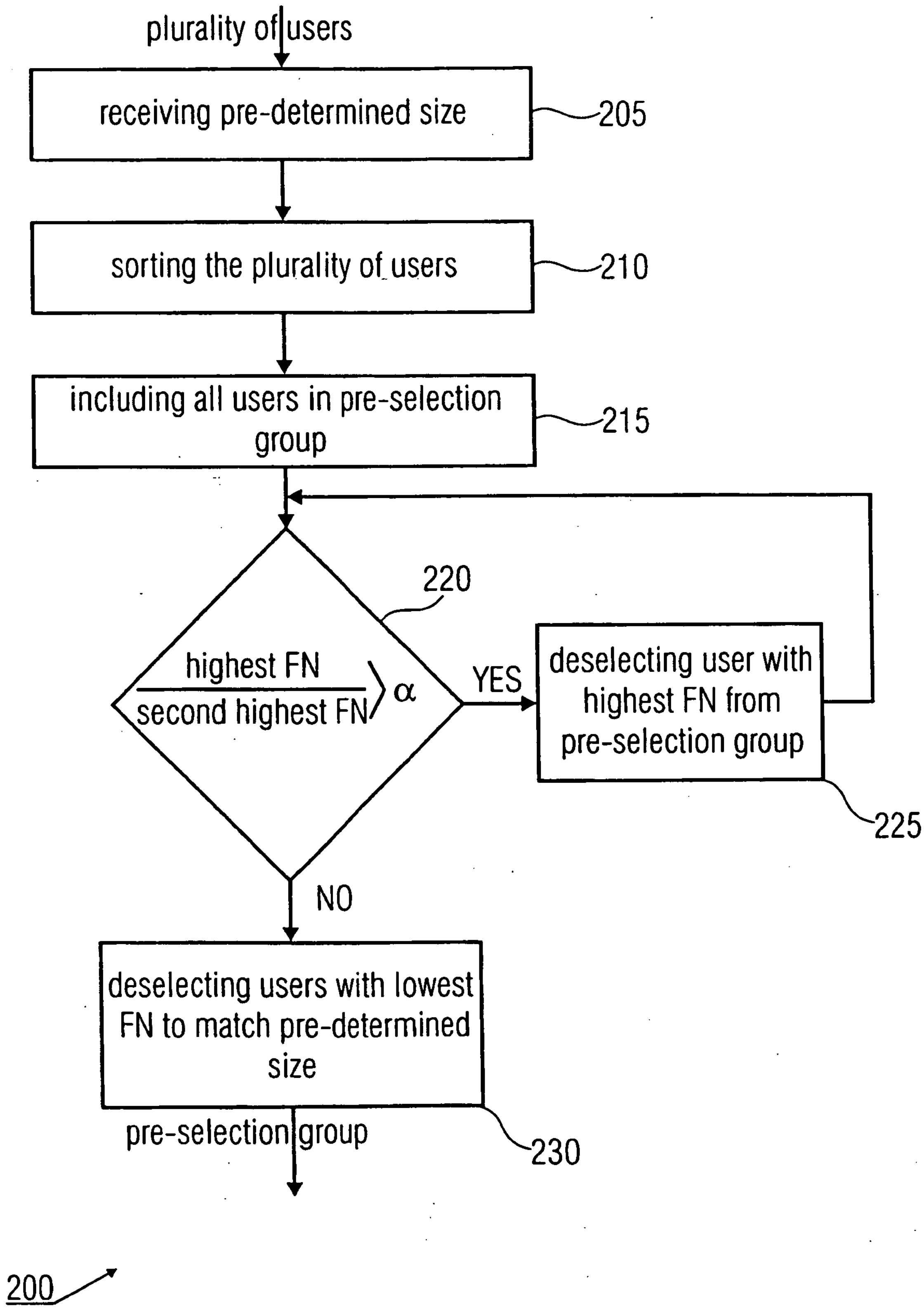
plurality of users
receiving pre-determined size
205
sorting the plurality of users
210
including all users in pre-selection group
215
220
highest FN / second highest FN > α
YES
deselecting user with highest FN from pre-selection group
225
NO
deselecting users with lowest FN to match pre-determined size
pre-selection group
230
200

FIG 2B

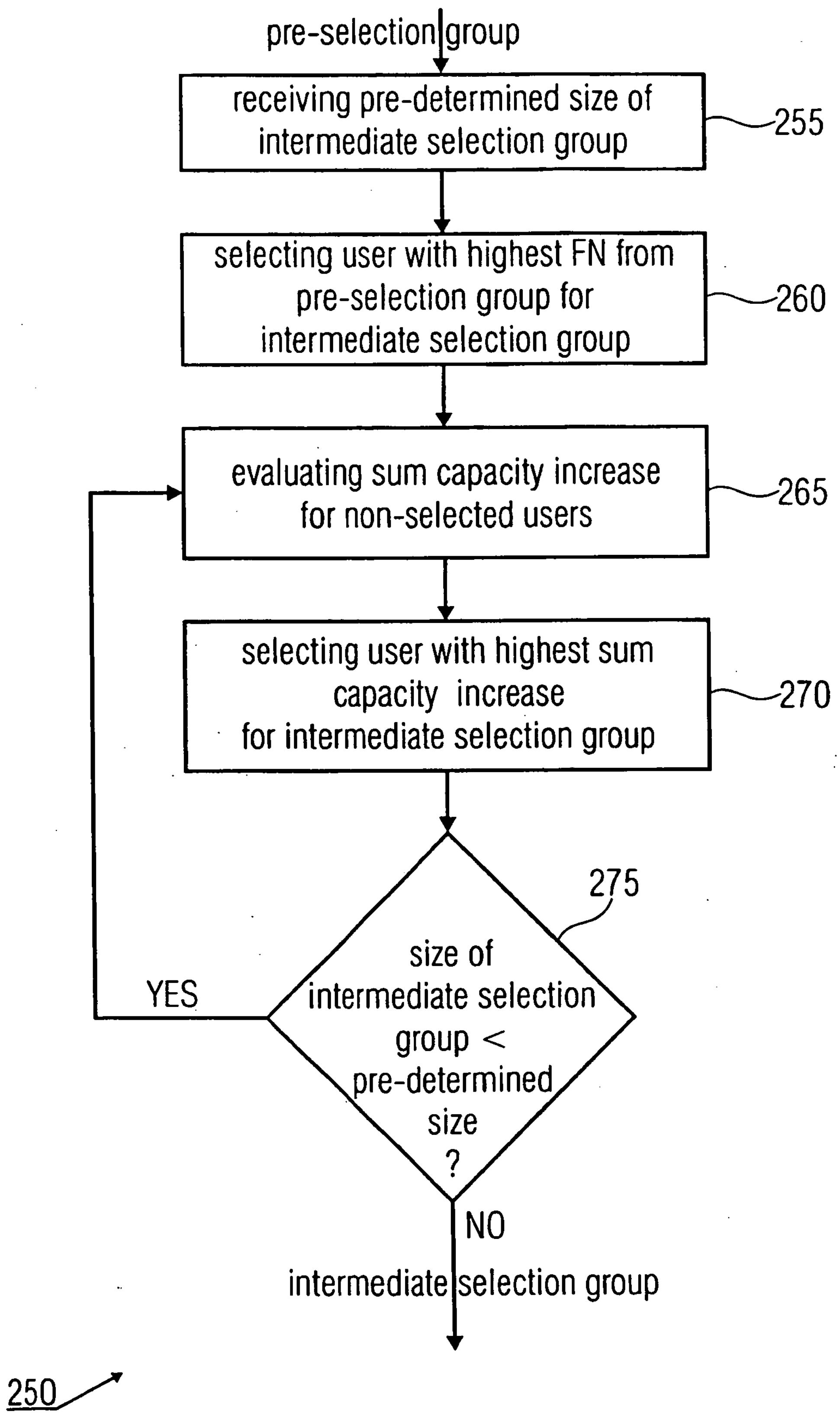
pre-selection group
receiving pre-determined size of intermediate selection group
255
selecting user with highest FN from pre-selection group for intermediate selection group
260
evaluating sum capacity increase for non-selected users
265
selecting user with highest sum capacity increase for intermediate selection group
270
275
size of intermediate selection group < pre-determined size ?
YES
NO
intermediate selection group
250

FIG 2C

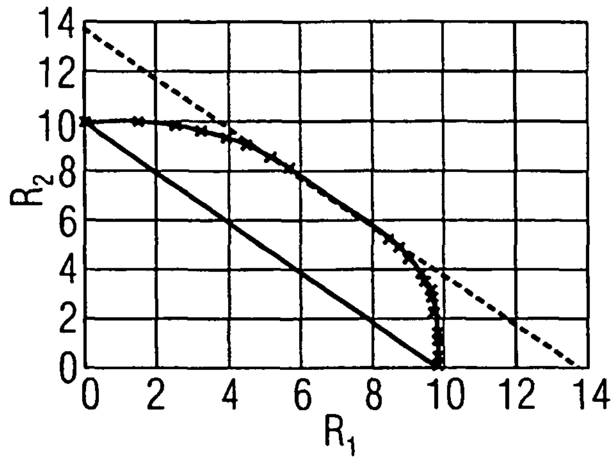


FIG 3A

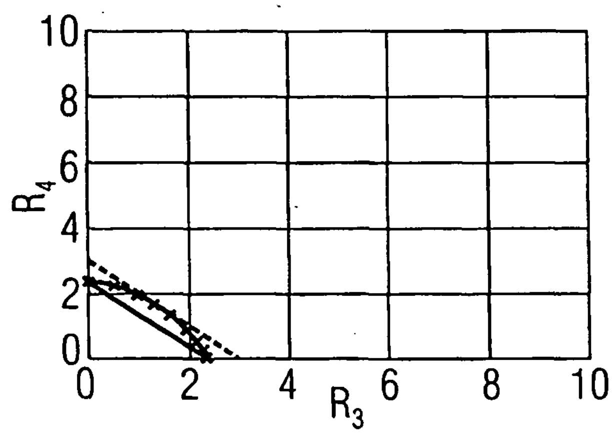


FIG 3B

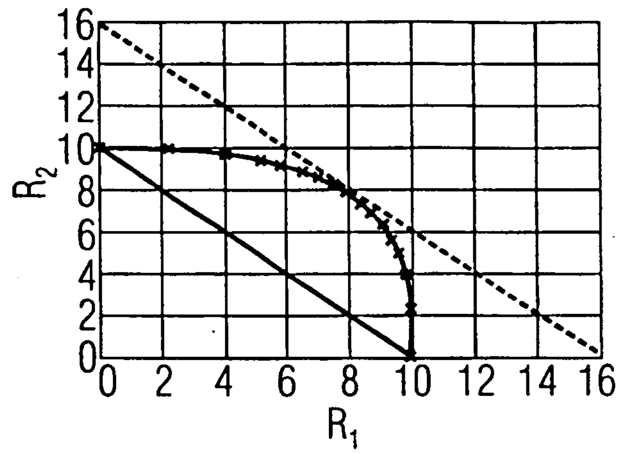
16
14
12
10
8
6
4
2
0
0 2 4 6 8 10 12 14 16
$R_2$
$R_1$

FIG 4A

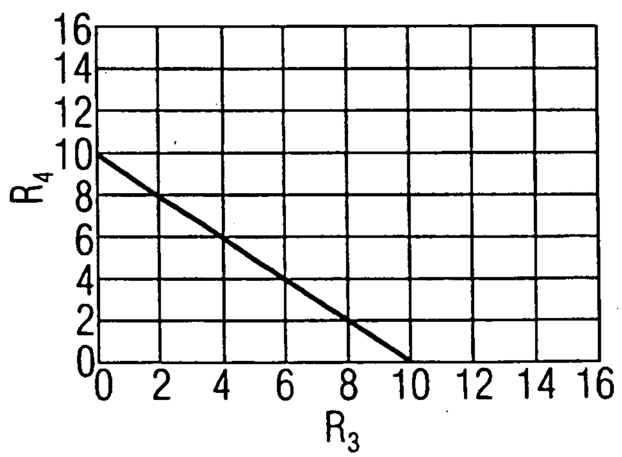
16
14
12
10
8
6
4
2
0
0 2 4 6 8 10 12 14 16
$R_4$
$R_3$

FIG 4B

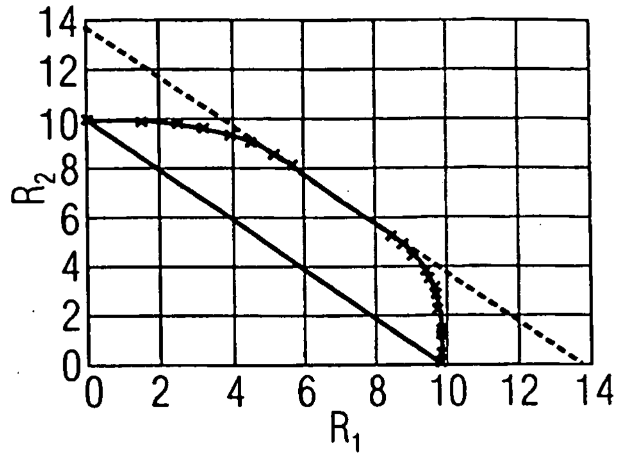


FIG 5A

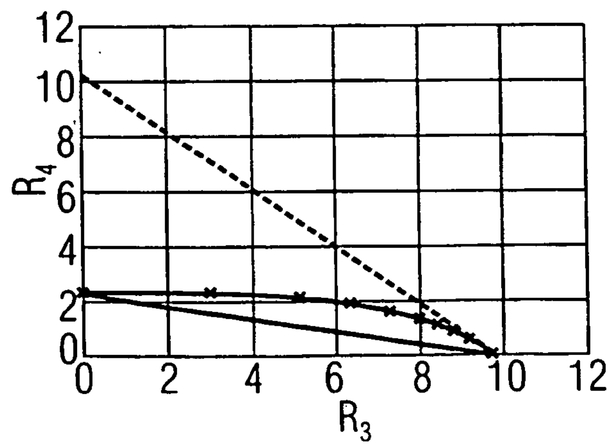


FIG 5B

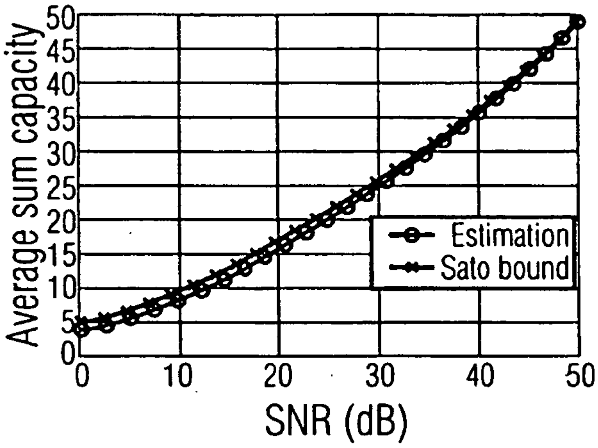
Average sum capacity
50
45
40
35
30
25
20
15
10
5
0
0
10
20
30
40
50
SNR (dB)
Estimation
Sato bound

FIG 6A

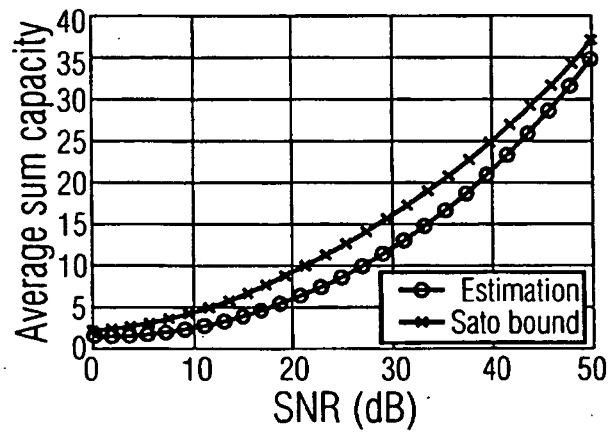
Average sum capacity
40
35
30
25
20
15
10
5
0
0
10
20
30
40
50
SNR (dB)
Estimation
Sato bound

FIG 6B

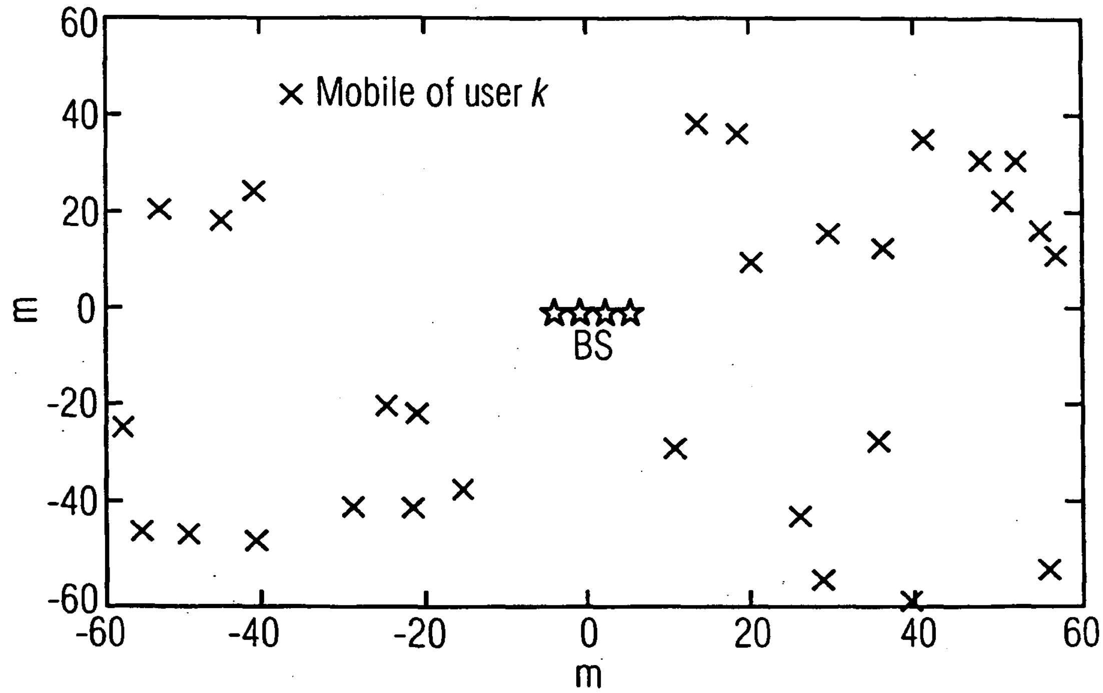


FIG 7

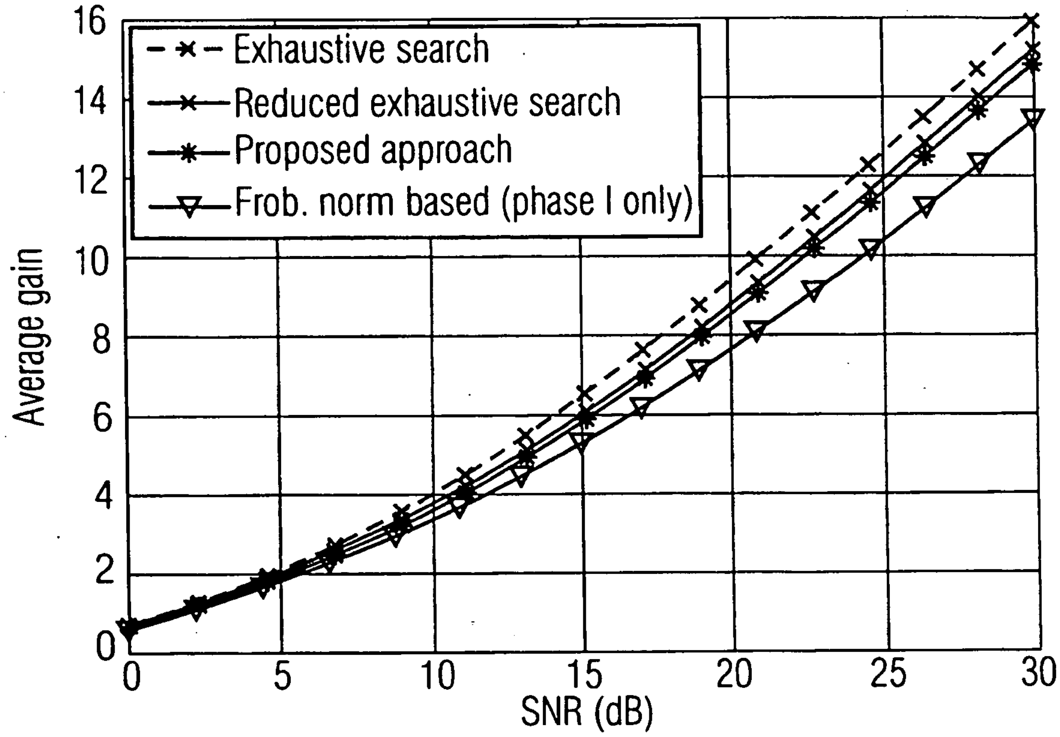
Exhaustive search
Reduced exhaustive search
Proposed approach
Frob. norm based (phase I only)
Average gain
16
14
12
10
8
6
4
2
0
0
5
10
15
20
25
30
SNR (dB)

FIG 8

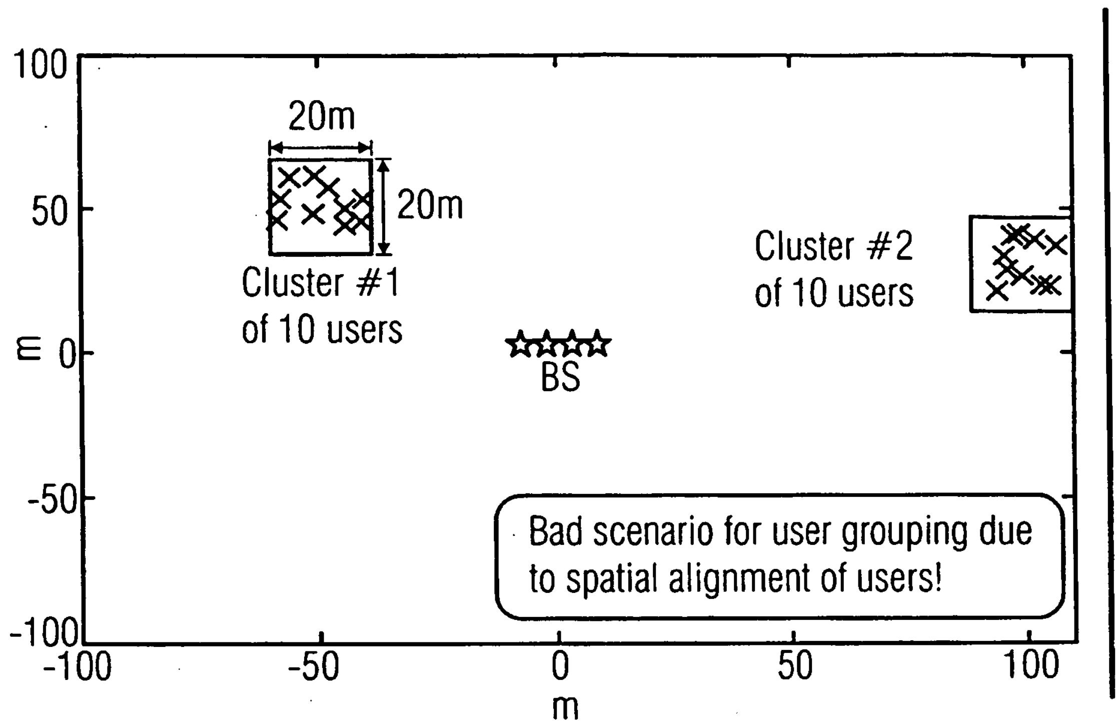
100
50
0
-50
-100
m
-100
-50
0
50
100
m
20m
20m
Cluster #1
of 10 users
Cluster #2
of 10 users
BS
Bad scenario for user grouping due
to spatial alignment of users!

FIG 9

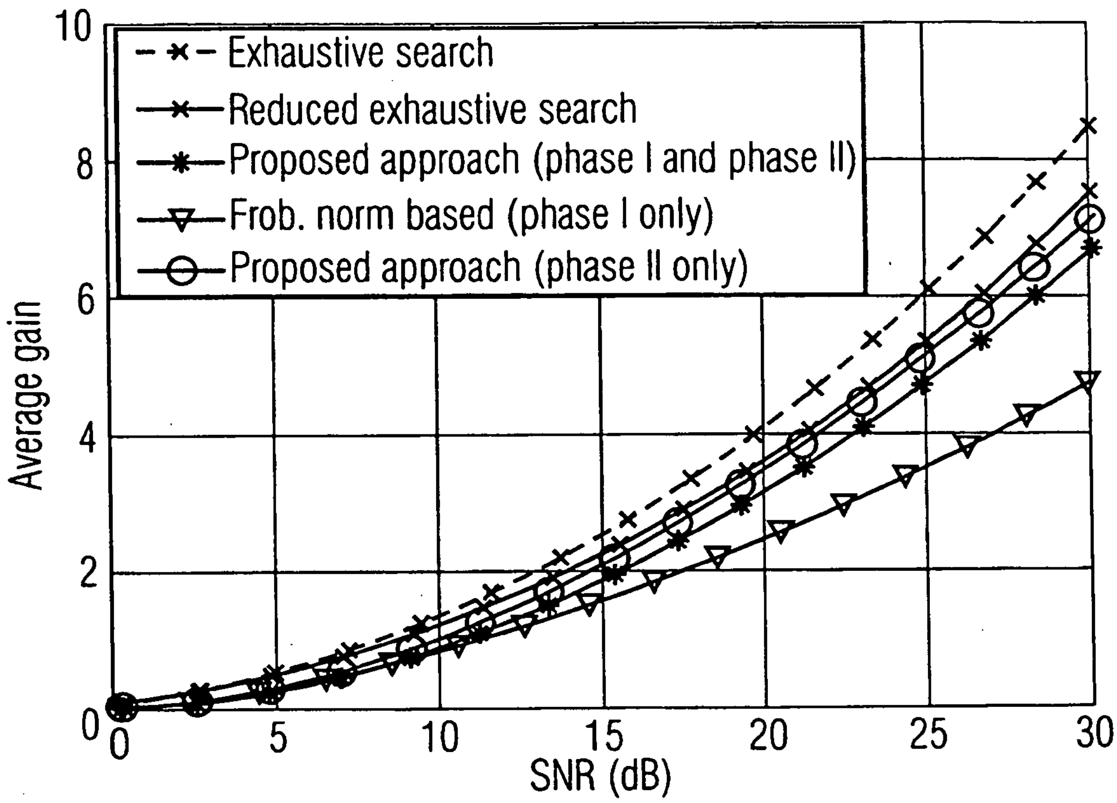
Exhaustive search
Reduced exhaustive search
Proposed approach (phase I and phase II)
Frob. norm based (phase I only)
Proposed approach (phase II only)
Average gain
SNR (dB)
0
2
4
6
8
10
0
5
10
15
20
25
30

FIG 10

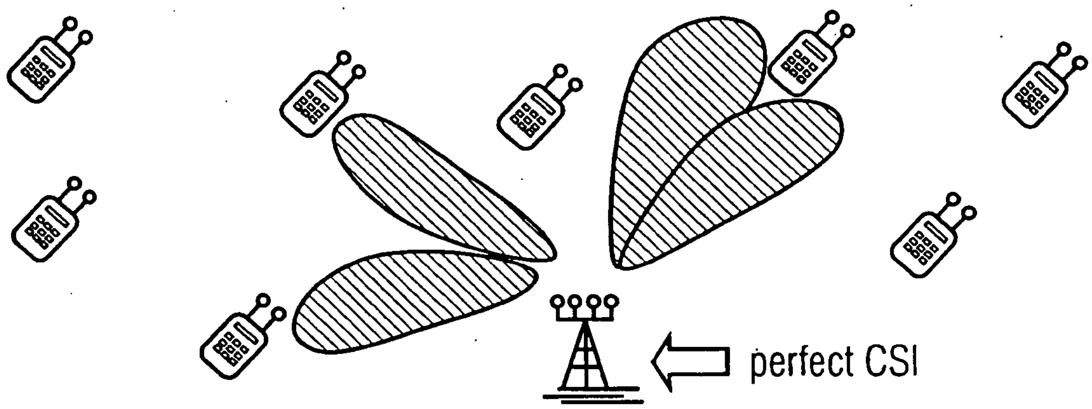


FIG 11 (State of the art)

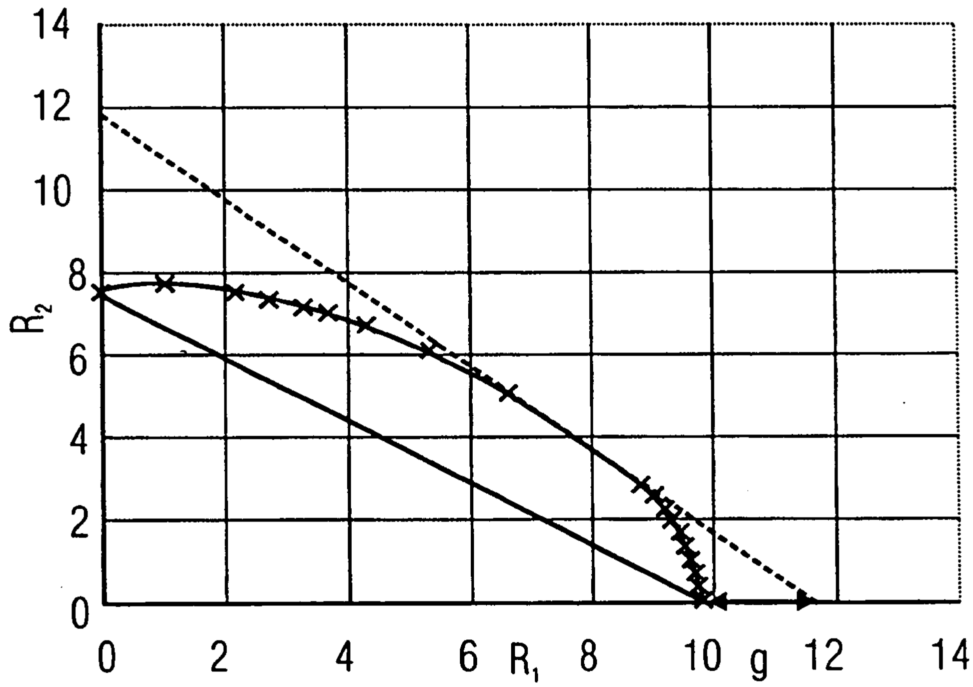


FIG 12 (State of the art)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **W. Yu.** Sum-Capacity Computation for the Gaussian Vector Broadcast Channel. *IEEE Transactions on Information Theory,* 2006, vol. 52, 754-759
- **W. Yu ; W. Rhee ; S. Vishwanath ; S. Jafar ; A. Goldsmith.** Sum Power Iterative Waterfilling for Multi-antenna Gaussian Broadcast Channels. *IEEE Transactions on Information Theory,* 2005, vol. 51, 1570-1580
- **P. Tejera ; W. Utschick ; G. Bauch ; J. A. Nossek.** Subchannel Allocation in Multiuser Multiple Input Multiple Output Systems. *IEEE Transactions on Information Theory,* October 2006, vol. 52, 4721-4733
- **M.H.M. Costa.** Dirty Paper Coding. *IEEE Transactions on Information Theory,* May 1983, vol. 29, 439-441
- **G. Aniba ; S. Aissa.** Multi-User Capacity Maximization for MIMO Gaussian Broadcast Channels. *Proc. of International Conference on Communications (ICC),* 2006
- **Q.H. Spencer ; A.L. Swindlehurst ; M. Haardt.** Zero-forcing Methods for Downlink Spatial Multiplexing in Multiuser MIMO Channels. *IEEE Trans. on Signal Processing,* February 2004, vol. 52 (2), 461-471
- **G. Caire ; S. Shamai.** On the Achievable Throughput of Multiantenna Gaussian Broadcast Channel. *IEEE Transactions on Information Theory,* July 2003, vol. 49 (7), 1691-1706
- **G. Dimic ; N.D. Sidoropoulos.** On Downlink Beamforming with Greedy User Selection. *IEEE Transactions on Signal Processing,* October 2005, vol. 53 (10), 3857-3868
- **J. Wang ; D.J. Love ; M. Zoltowski.** User Selection for the MIMO Broadcast Channel with a Fairness Constraint. *Proc. of IEEE International Conference on Acoustics, Speech, and Signal Processing (ICASSP),* 2007
- **T. Yoo ; A. Goldsmith.** On the Optimality of Multiantenna Broadcast Scheduling Using Zero-Forcing Beamforming. *IEEE Journal on Selected Areas in Communications,* March 2006, vol. 24 (3), 528-541
- **T. Yoo ; A. Goldsmith.** Sum-Rate Optimal Multi-Antenna Downlink Beamforming Strategy Based on Clique Search. *Proc. of Global Telecommunications Conference (GLOBECOM),* 2005
- **M. Fuchs ; G. Del Galdo ; M. Haardt.** Low-Complexity Space - Time - Frequency Scheduling for MIMO Systems With SDMA. *IEEE Transactions on Vehicular Technology,* September 2007, vol. 56, 2775-2784
- **Q.H. Spencer ; A.L. Swindlehurst.** Channel Allocation in Multi-user MIMO Wireless Communications Systems. *Proc. of International Conference on Communications (ICC),* 2004
- **T.F. Maciel ; A. Klein.** A Convex Quadratic SDMA Grouping Algorithm Based on Spatial Correlation. *Proc. of International Conference on Communications (ICC),* 2007
- **Zukang Shen et al.** Low complexity user selection algorithms for multiuser MIMO systems with block diagonalization. *IEEE Transactions on Signal Processing,* September 2006, vol. 54 (9
- **Z. Shen ; R. Chen ; J.G. Andrews ; R.W. Heath ; B.L. Evans.** Low Complexity User Selection Algorithms for Multiuser MIMO Systems with Block Diagonalization. *IEEE Transactions on Signal Processing,* September 2006, vol. 54 (9), 3658-3663
- **H. Viswanathan ; S. Venkatesan ; H. Huang.** Downlink Capacity Evaluation of Cellular Networks With Known-Interference Cancellation. *IEEE Journal on Selected Areas in Communications,* June 2003, vol. 21 (6), 802-811
- **M. Fuchs ; G. Del Galdo ; M. Haardt.** Low-Complexity Space -Time - Frequency Scheduling for MIMO Systems With SDMA. *IEEE Transactions on Vehicular Technology,* September 2007, vol. 56, 2775-2784
- **T.F. Maciel ; A. Klein.** A Low-Complexity SDMA Grouping Strategy for the Downlink of Multi-User MIMO Systems. *Proc. of IEEE International Symposium on Personal, Indoor and Mobile Radio Communications (PIMRC),* 2006
- **J. Lee ; N. Jindal.** High SNR Analysis for MIMO Broadcast Channels, Dirty Paper Coding Versus Linear Precoding. *IEEE Transaction on Information Theory,* 2007, vol. 53, 4787-4792
- **D.S. Baum et al.** Final Report on Link Level and System Level Channel Models. *Technical report, IST-2003-507581 WINNER D5.4 v. 1.0,* 2005